(19) Europäisches Patentamt
European Patent Office
Office européen des brevets

(11) EP 2 861 387 B1

(12) EUROPEAN PATENT SPECIFICATION

(45) Date of publication and mention
of the grant of the patent:
**14.09.2016 Bulletin 2016/37**

(51) Int Cl.:
***B25J 9/00*** *(2006.01)*

(21) Application number: **13777117.6**

(22) Date of filing: **11.06.2013**

(86) International application number:
**PCT/IB2013/054778**

(87) International publication number:
**WO 2013/186701 (19.12.2013 Gazette 2013/51)**

(54) **ACTUATING METHOD AND DEVICE FOR HUMAN INTERACTION MULTI-JOINT MECHANISMS**

VERFAHREN ZUM BETREIBEN UND GERÄT ZUR MENSCH-MEHRFACH GELENKEINRICHTUNG INTERAKTION

MÉTHODE POUR ACTIONNER UN DISPOSITIF ET DISPOSTIF POUR INTERACTION HOMME-DISPOSITIF MULTI-ARTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2012 IT PI20120070**

(43) Date of publication of application:
**22.04.2015 Bulletin 2015/17**

(73) Proprietor: **Scuola Superiore S.Anna
56127 Pisa (IT)**

(72) Inventors:
• **BERGAMASCO, Massimo
I-56010 Castelmaggiore - Calci (IT)**
• **SALSEDO, Fabio
I-56125 Pisa (IT)**
• **LENZO, Basilio
I-57025 Piombino (LI) (IT)**

(74) Representative: **Celestino, Marco
ABM Agenzia Brevetti & Marchi,
Viale Giovanni Pisano, 31
56123 Pisa (IT)**

(56) References cited:
**EP-A1- 2 052 709     WO-A2-2012/042416**

• **FRISOLI A ET AL: "Robot-mediated arm rehabilitation in Virtual Environments for chronic stroke patients: A clinical study", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19 May 2008 (2008-05-19), pages 2465-2470, XP031340527, ISBN: 978-1-4244-1646-2**
• **FRISOLI A ET AL: "A New Force-Feedback Arm Exoskeleton for Haptic Interaction in Virtual Environments", HAPTIC INTERFACES FOR VIRTUAL ENVIRONMENT AND TELEOPERATOR SYSTEMS, 20 05. WHC 2005. FIRST JOINT EUROHAPTICS CONFERENCE AND SYMPOSIUM ON PISA, ITALY 18-20 MARCH 2005, PISCATAWAY, NJ, USA,IEEE, 18 March 2005 (2005-03-18), pages 195-201, XP010781861, DOI: 10.1109/WHC.2005.15 ISBN: 978-0-7695-2310-1**
• **BERGAMASCO M ET AL: "An arm exoskeleton system for teleoperation and virtual environments applications", ROBOTICS AND AUTOMATION, 1994. PROCEEDINGS., 1994 IEEE INTERNATIONAL C ONFERENCE ON SAN DIEGO, CA, USA 8-13 MAY 1994, LOS ALAMITOS, CA, USA,IEEE COMPUT. SOC, 8 May 1994 (1994-05-08), pages 1449-1454, XP010097703, DOI: 10.1109/ROBOT.1994.351286 ISBN: 978-0-8186-5330-8**

## Description

Field of the invention

The present invention relates to the devices for human interaction (Physical Human-Device Interaction),

In particular, the invention relates to a method for operation of a multi-joint mechanism for human interaction.

Furthermore, the invention relates to a device that carries out this method.

Description of the prior art

Devices are known arranged to physically interact with a human that can be applied for example to: rehabilitation of patients after neurological trauma (Rehabilitation Robotics), daily assistance to elderly and disabled persons (Assistive Robotics) or the reduction of articular stresses deriving from handling material in logistic and production processes (Material Handing Robotics).

These devices consist of multi-joint mechanisms, which are directly or indirectly, for example by interposition of a tool, in physical contact with the body of the user in at least one point, in order to provide determined forces of interaction, adapted, for example, to displace a load or to help the patient to effect rehabilitation movements.

So-called "zero gravity balancers" are also known, which reduce the weight of instruments, as used by a manual operator in a production line, or reduce the weight of a limb of a patient, as in the case of robotic systems used for neuromotor rehabilitation.

In a typical application of these devices the generated forces of interaction with a human are constant for relatively long time. Then, these devices can be classified as active or passive, responsive to the presence or absence of actuators used for generating the interaction force. The advantages and the drawbacks of the two types of devices are described hereafter.

The active systems have a high rate of flexibility, since they allow generating forces of interaction of intensity and direction quickly variable with time. An example of active device interacting with a human is an exoskeleton for the lower limbs as described in CN102088933, in which actuators acting at the hip joints generate torques for supporting a patient's gait.

However, for generating the interaction force, the active systems use actuators, for example electric motors, which are continuously supplied with electric power for each condition of operation. It follows a high energy consumption and a need of heavy and bulky accumulators/generators, which cannot be easily mounted to the device, as it would be desirable for active orthoses.

Furthermore, the active systems require appropriate sensors and sophisticated controls of the actuators for achieving a sufficient precision of the interaction force with a human. Such solution is not inherently safe for the user since instability of the interaction force can occur if the controller of the device is not enough robust to the variability of the dynamic parameters of a human and of the environment with which the device interacts physically.

Differently, the passive devices, using passive elements to generate the interaction force, such as counterweights or elastic elements, do not require any energy in all operative conditions, do not require sensors and sophisticated controls and are inherently safe, owing to the passive nature of their actuation technique. Furthermore, they can be applied in many applications where the forces of interaction with a human are constant for relatively long time.

For example in FR2541574A1 or in WO2012042416A2 passive systems are described capable of supporting and balancing in any configuration a human arm, using suitable counterweights, which are chosen according to the size of the user.

On the other hand, the need of a manual adjustment of the passive device does not allow a quick and continuous change of the interaction force. Furthermore, the presently known balancing/actuating techniques based on passive elements, such as resilient elements and/or counterweights, determine a structure of the mechanisms that is kinematically complex, like, for example, wearable exoskeletons for the human limbs.

A further drawback of the presently known passive devices is an excessive encumbrance of the movable parts of the mechanism and a reduced mobility of their joints, caused by the need of the passive elements and the relative accessory components to be housed in a same structure of the mechanism.

Devices also exist using resilient elements as described in R Barents, M Schenk, WD Van Dorsser, BM Wisse, JL Herder, (2011), "Spring-to-Spring Balancing as Energy-Free Adjustment Method in Gravity Equilibrators", ASME Journal of Mechanical Design, Volume 133, Issue 6, pp 061010. A spring is used that works as accumulator of elastic energy, in such a way that the total energy of the system, i.e. the sum of both the potential and the elastic energy, is constant. In the same document, it is explained that the exploited physical principle requires necessarily the use of a spring having zero rest length. Such spring has the feature of applying a force proportional to its length, instead of a force proportional to its lengthening/shortening. However, the application of such devices to a multi-joint mechanism would be complex and troublesome.

Summary of the invention

It is therefore a feature of the present invention to provide a method and a device for actuation of a multi-joint mechanism interacting physically with a human being, which allows generating a system of a predetermined force at a contact point of the mechanism with the human limbs, achieving the advantages of both the passive techniques and of the active techniques, without having their drawbacks.

It is a particular feature of the present invention to provide such a method and device that allows changing the intensity and direction of this force without the need to a manual adjustment.

It is another particular feature of the present invention to provide such a method and device that does not require energy consumption, until the intensity and/or the direction of the force are kept constant with time.

It is another feature of the invention to provide such a method and device that is not too much cumbersome in the region fixed to the human limbs.

It is another feature of the invention to provide a method for actuation, for a multi-joint mechanism interacting physically with a human being, which has a reduced size at the portion of the device connected to the human limbs.

It is still a feature of the invention to provide such a method and device that do not limit the amplitude of the movement admitted by the device.

It is yet another feature of the invention to provide such a method and device that can be applied to any kinematical configuration of a multi-joint mechanism, irrespective of the number and succession of the degrees of freedom and, in particular, that can be applied to kinematical configurations that are isomorphic to the human limbs, as in the case of exoskeletons wearable on the human arms or legs.

These and other objects are achieved by an actuating device for a multi-joint mechanism, said multi-joint mechanism comprising:

- a base portion;
- a base joint that has a rotation axis that is integral to said base portion and defines a first reference system integral to said base portion;
- an interaction portion which is adapted to provide to a user's limb a contact point, at which an interaction force that has a predetermined intensity and direction, with respect to said first reference system, is applied to said limb;
- a predetermined number of movable portions (links) connected to each other by means of joints, in order to form a serial kinematic chain starting from said base joint, so that the first movable portion is connected to said base portion from said base joint and the last movable portion is integral to said interaction portion, each of said movable portions comprising a kinematic segment whose length is invariant upon movement of said interaction portion with respect to said base portion, said kinematic segment being the shortest segment connecting a first axis with a second joint axis of adjacent joints of a movable portion or, in case of the last movable portion, said kinematic segment is a segment located between the last joint and said contact point of said interaction portion;

wherein said actuating device comprises:

- a mirror mechanism comprising:

  - one or more mirror joints integral to said base portion, of which one of said joints defines a second reference system integral to said base portion,
  - a number of mirror movable portions and, respectively, of mirror kinematic segments which is the same number as the movable portions of kinematic segments of said multi-joint mechanism, each mirror kinematic segment being pivotally connected to said base portion at one end thereof and at one end of at least one of said mirror joints and have a length that is proportional to the length of the corresponding kinematic segment of the multi-joint mechanism, according to a same proportionality factor for all the kinematic segments;

- a balance force generation means that generates a system of balance forces acting on said mirror kinematic segments,
- a transmission means that is located between said multi-joint mechanism and said mirror mechanism, wherein said transmission means is configured to:

  - maintain the direction of each kinematic segment of said multi-joint mechanism with respect to said first reference system substantially the same as the direction of each of said mirror kinematic segments with respect to said second reference system, for any possible movements of said interaction portion with respect to said base portion,
  - transmitting said system of balance forces from said mirror mechanism to said multi-joint mechanism, in order to balance said interaction force applied at said contact point of said interaction portion.

This way, since the mirror mechanism has the same number of kinematic segments of the multi-joint mechanism, it is possible to associate each mirror segment to a corresponding kinematic segment of the multi-joint mechanism and vice-versa.

However, whereas the kinematic segments of the multi-joint mechanism, which form the polygonal chain that connects the contact point of the interaction portion with the base portion, have normally both the ends movable with respect to the base portion of the multi-joint mechanism, the mirror mechanism has the mirror segments all pivotally connected to the base portion at one end thereof and, accordingly, have all one fixed end to the base portion This simplification allows generating the system of balance forces as simple torques about the respective fixed ends at the base portion of the mirror kinematic segments, by means of torque generators. Such torque is then transmitted to a respective joint of the multi-joint mechanism by the transmission means.

In particular, the transmission means between the multi-joint mechanism and the mirror mechanism can be sized, in order to ensure that the directions of the kinematic segments of the mirror mechanism with respect to the second reference system are substantially the same as the corresponding directions of the kinematic segments of the multi-joint mechanism with respect to the first reference system, for any possible movements of the interaction portion with respect to the base portion of the multi-joint mechanism. This way, if said generation means generates forces in such a way that all the kinematic segments of the mirror mechanism are balanced for a same first force, acting at the movable end and having a certain intensity and direction with respect to the second reference system, the multi-joint mechanism is balanced for an interaction force having same orientation of the first force, but with respect to the first reference system, and intensity proportional to the first force.

It should be noted that if a kinematic segment of the multi-joint mechanism has a length that is substantially zero, because, for example, the two axes adjacent of a movable portion of the multi-joint mechanism are incident at a point, it is not necessary generating any torque on the corresponding kinematic segment of the mirror mechanism, since the couple delivered by the interaction force on the first end of the kinematic segment of the multi-joint mechanism is zero, being its second end substantially coincident with the first. Therefore it is enough that the generation means generates balance forces acting on said mirror mechanism in a same number as the kinematic segments that have a non-zero-length, which is normally less than the number of degrees of freedom of the multi-joint mechanism of the serial kinematic chain.

In particular, said generation means comprises torque generators.

In particular, each of said torque generators comprises at least one passive resilient element having a first and a second end, wherein said first end is connected to the mobile end of the non-zero-length mirror kinematic segment associated with the torque generator, and said second end is connected to a support element integral to said base portion of the multi-joint mechanism.

Said resilient elements can be structured and sized in such a way that the torque generated by said or each passive resilient element is substantially the same as the intensity of the torque generated by said interaction force, applied to a second end of the kinematic segment of said multi-joint mechanism and interacting with the passive resilient element, and determined at a first end of the kinematic segment.

Advantageously, said balance force generation means that generates a system of balance forces acting on said mirror mechanism comprises a force direction change means for changing the direction of said interaction force, without requiring the manual intervention of an operator.

Advantageously, said force intensity change means of said interaction forces comprises a first means for moving said support element with respect to said base portion, in particular arranged to change the distance between said first and said second ends.

Always advantageously, said means for changing said interaction forces comprises a second means for moving said support element with respect to said base portion, for changing the direction of said interaction force.

Advantageously, said force direction change means comprises a second means for moving said support element with respect to said base portion, in particular arranged to change the direction of the line that passes between said first and said second ends.

In particular, said balance force generation means that generates a system of balance forces in said mirror mechanism comprises torque generation mechanisms in the same number as said kinematic segments that have a non-zero-length, wherein each of said torque generation mechanisms:

- is mechanically connected to said mirror mechanism and to said force intensity change means and/or said force direction change means;
- is equipped only with passive resilient elements,
- is associated to a specific kinematic segment of said mirror mechanism.

This way, the balance force generation means that generates a system of balance forces in the mirror mechanism can comprise torque generation mechanisms having active elements i.e. of actuators, and in the same number as the kinematic segments of non-zero length of the mirror mechanism and, respectively, of the multi-joint mechanism, and not necessarily in the same number as the degrees of freedom of the multi-joint mechanism. For this reason, to each kinematic segment a single torque generation mechanism and vice-versa can be associated that has connections with the corresponding segment of the mirror mechanism and with the base portion of the multi-joint mechanism.

Furthermore, the torque acting on the joints of the multi-joint mechanism, necessary to balance the interaction force with the user, are generated by a use of the passive elements, contained in the torque generation mechanisms, without supplying external forces until the interaction force has constant intensity and direction, with respect to the base portion of the mechanism. Such feature allows high energy saving and range of the batteries of the torque generators. Furthermore, it reduces remarkably the weight, owing to the absence of heavy motors for the torque generators.

Furthermore, such a device allows changing the intensity and direction of the interaction force with respect to the support of the multi-joint mechanism automatically, acting on the actuators of the mechanism that has the task of changing the intensity and/or direction of the interaction force and, accordingly, without any manual interventions.

In particular, said mirror mechanism is located remotely with respect to said multi-joint mechanism. For example, it can be arranged in a backpack worn by the user, or in a transmission box adjacent to the user. This assists remarkably to make a light structure of the multi-joint mechanism, which has not to house torque generation mechanisms or possible motors for changing the intensity and/or the direction of the force. Further advantage of the removal of such components from the multi-joint mechanism is the possibility of reducing to the minimum possible the mass and the size of the links and mobile kinematic segments, consistently with the mechanical stress generated by the external forces acting on the device.

In particular, the reduced masses and size of the mobile segments of the multi-joint mechanism allow the production of devices of interaction with a human with high dynamic performances and workspace closer to a natural workspace of the human limbs with respect to the existing mechanisms, owing to less limits to the movements, than, differently, larger and heavier segments would require to avoid possible interferences with the human limbs, while wearing the device.

A further advantage is that of configuring the mirror mechanism and the torque generation mechanisms with wide freedom for the designers, without the need of meeting the constraints owing to the size of the human limbs, because torque is generated remotely.

Finally, being the first end of the mirror segments integral to the base portion of the multi-joint mechanism, the design of the device for changing the direction and the intensity of the interaction force is largely simplified, with respect to the case in which such end is mobile.

In a preferred exemplary embodiment, said transmission means comprises a plurality of inextensible tendons that engage with a plurality of pulleys provided in said multi-joint mechanism and also in a plurality of mirror pulleys in said mirror mechanism.

Advantageously, each inextensible tendon defines a loop with said pulleys. Alternatively, the tendons can be arranged to form an agonist-antagonist actuating system.

In particular, pulleys are arranged at the joints of said multi-joint mechanism that are associated with a corresponding plurality of mirror pulleys that are respectively arranged at the mirror joints of said mirror mechanism.

The first reference system and the second reference system are different from each other, but the relative shift angle between the two reference systems is fixed, being they integral to the base portion of the multi-joint mechanism. Preferably, the first reference system and the second reference system coincide and the mirror segments are always parallel to the kinematic segments of the multi-joint mechanism.

In a possible exemplary embodiment, said torque generation mechanism comprises:

- a first rigid body and a second rigid body mechanically connected by a joint that has an axis fixed to both of them;
- a first, a second and a third idle pulley, whose axes are parallel to one another and arranged at the vertices of a triangle, being the axes of the first and of the third pulley integral to said first rigid body, the axis of the second pulley integral to said second rigid body and the axis of the third pulley collinear with the joint axis of said second rigid body with respect to said first rigid body;
- a passive linear resilient element having a first end connected to said first rigid body;
- an inextensible tendon or tendon, which is wound outside on the three pulleys and which has the first end connected to said first rigid body and the second end connected to the second end of the resilient element.

This way, it is possible to reproduce the mechanical action of a resilient linear element with rest length equal to zero, connected directly on the axes of the first and of the second pulley. Furthermore, this mechanical action produce a couple at the joint axis of the second rigid body with respect to the first, which is suitable for balancing a force acting on a incidence point between the axis of the first pulley with the axis of the second pulley, being this force unchanging, both for intensity and for direction, with respect to said first rigid body, versus the relative position of said second rigid body with respect to the first. In particular, the direction of the balanced force is parallel to a segment connecting the first pulley and of the third pulley and the intensity of the force is directly proportional to the distance of the axis of the third pulley with respect to the axis of the first pulley.

In order to change the intensity and direction of the interaction force, thus, it is sufficient changing the distance of the axis of the first pulley with respect to the axis of the third and the direction of the segment that connects the axis of the first pulley with the axis of the third, and example by means of motors, preferably automatically.

In a possible exemplary embodiment, said multi-joint mechanism comprises:

- a first movable portion that is movably joined to the base portion from the base joint
- a second movable portion which works as interaction portion with the user's limb, in order to provide said contact point,
- a second joint, which pivotally connects the interaction portion with the first movable portion, wherein the axis of the base joint and the axis of the second joint are mutually orthogonal and incident with each other in a point that is distinct from said contact point;

wherein said second movable portion, which works as interaction portion, has said contact point that does not fall on the axis of the second joint and, accordingly, a non-zero distance exists between the axis of said second joint and said contact point,
said mirror mechanism comprises:

- a mirror base portion coincident or integral to the base portion of the multi-joint mechanism,
- a first mirror movable portion pivotally connected to the mirror base portion by a first mirror joint
- a second mirror movable portion pivotally connected to the first movable mirror by a second mirror joint

wherein the axes of said first and said second mirror joint are mutually orthogonal and incident with each other at said mirror joint;
said transmission means comprises:

- a first driven pulley and an idle pulley, both having their own axes coincident with the axis of said base joint, wherein said first driven pulley is integral to said first movable portion of said multi-joint mechanism;
- a second driven pulley co-axial to the axis of said second joint of the multi-joint mechanism and integral to the interaction portion of the multi-joint mechanism;
- possible secondary idle pulleys mounted to the first movable portion of the multi-joint mechanism;
- a first mirror driven pulley and a mirror idle pulley, coaxial to the axis of said first joint of said mirror mechanism and being said first mirror driven pulley integral to said first mirror movable portion;
- a second mirror driven pulley, which has an axis aligned to the axis of said second joint of the mirror mechanism and being said second mirror driven pulley integral to said second mirror movable portion;
- possible secondary mirror idle pulleys, mounted to the first mirror movable portion;
- inextensible tendons that are wound about said driven and idle pulleys of the multi-joint mechanism and of the mirror mechanism, in such a way that two independent mechanical transmissions are provided, wherein a first mechanical transmission transmits the torque generated on said first mirror driven pulley to said first driven pulley of the multi-joint mechanism, and a second mechanical transmission transmits the torque generated on said second mirror driven pulley to said second driven pulley of the multi-joint mechanism,

wherein the secondary idle pulleys and the secondary mirror idle pulleys deflect the inextensible tendons in such a way that the latter are always in contact with the idle and driven pulleys during all possible movements of said multi-joint mechanism.

In order to ensure that the direction of the kinematic segment of said multi-joint mechanism, with respect to said first reference system, is substantially the same as the direction of the corresponding kinematic segment of said mirror mechanism, with respect to said second reference system, for any possible movements of the multi-joint mechanism, it is necessary that the primitive diameters of said driven and idle pulleys, are equal to the corresponding driven mirror pulleys and idle mirror pulleys.

In this example of applying the method it is possible to use a single torque generation mechanism, since the multi-joint mechanism even if having two movable portions has a single kinematic segment that have a non-zero length, i.e. the segment relative to the second movable portion of the multi-joint mechanism. The kinematic segment relative to the first movable portion, in fact, has length equal to zero, since axes adjacent of this movable portion are incident with each other in a point. Correspondingly, the mirror mechanism can have a single mirror kinematic segment of non-zero length..

Advantageously, in order to enable the torque generation mechanism to generate a balance torque congruent with the interaction force demand, the segment that connects the axis of the third pulley with the axis of the second pulley of the torque generator is parallel to the mirror segment to it associated and the segment that connects the axis of the first pulley with the axis of the third pulley is parallel to the direction mirror the interaction force, i.e. parallel to that direction whose direction with respect to said second reference system is equal to the direction of the interaction force demand with respect to said first reference system.

In the above described exemplary embodiment, this condition can be obtained connecting the second rigid body of the torque generation mechanism with the second movable portion of the mirror mechanism, at a first connection joint which has an axis parallel with the segment that connects the axis of the second pulley of the torque generation mechanism with the axis of its third pulley, and connecting the first rigid body of the torque generation mechanism with the base portion of the multi-joint mechanism, at a second connection joint which has an axis parallel to the segment that connects the axis of the first pulley with the axis of the third pulley of the torque generation mechanism and parallel to the direction of the interaction force demand, being the axes of said first and said second connection joint incident at a point coincident with the fixed end of the kinematic segment of the mirror mechanism of competence of the torque generation mechanism.

As said, the direction of the interaction force and, accordingly, the direction of said segment that connects the axis of the first pulley with the axis of the third pulley of said torque generation mechanism can be changed by said means for changing the direction of the interaction force. To allow an arbitrary change of this direction in a three-dimensional space, it is enough that these means allows for rotations of said segment that connects the axes, with respect to the base portion of the multi-joint mechanism, about two axes not parallel to said junction and incident with each other at a point of said junction and coincident with the fixed end of the kinematic segment associated with the torque generator.

In a possible embodiment the means for changing the direction of the interaction forces comprises a serial kinematic chain mechanism having two rotational degrees of freedom that has axes incident with each other at a point coincident with the fixed end of the kinematic segment of the mirror mechanism. Advantageously, this rotation axes are orthogonal.

In another possible embodiment of the torque generation mechanism, the loop of the inextensible tendon is made of two different portions, the first portion connecting the first pulley with the second pulley, the second portion connecting the second pulley with the third pulley. Furthermore, the second pulley is made with two different pulleys, a mother pulley and a daughter pulley integral to each other and having a rotation axes coincident but with different planes of the grooves for the tendon and displaced axially. Finally, the plane of the groove for the tendon of the first pulley is aligned with the plane of the groove of said mother pulley of the second pulley, whereas the third pulley is aligned to said daughter pulley of the second pulley to allow that the encumbrance of the first pulley does not interfere with the encumbrance of the third pulley, when the intensity of the interaction force or the direction of the interaction force change.

This exemplary embodiment is configured to adjust the intensity of the interaction force, since it makes it possible to obtain positive, null or negative values of this intensity.

In a further possible exemplary embodiment, said multi-joint mechanism comprises:

- a first movable portion that is movably joined to the base portion through the base joint;
- a second movable portion that is movably joined to the first movable portion through a second joint;
- a third movable portion that is movably joined to the second movable portion through a third joint;
- a fourth movable portion that is movably joined to the third movable portion through a fourth joint, wherein said fourth movable portion works as interaction portion with the user's limb, in order to provide said contact point,

wherein:

- said base joint and said second and third joints have axes that in pairs are mutually orthogonal and incident with each other in a same point of incidence,
- said fourth joint has axis parallel to the axis of the third joint so that the minimum distance between the axis of said third and said fourth joint determines a first kinematic segment that have a non-zero length,
- said fourth movable portion works as interaction portion and said contact point, which is integral to the interaction portion, does not fall on the axis of the fourth joint, such that the kinematic segment relative to the fourth movable portion is also not zero. Therefore the multi-joint mechanism has only two kinematic segments that have a non-zero length and, therefore, needs only two torque generators;

wherein said mirror mechanism comprises:

- a mirror base portion coincident or integral to the base portion of the multi-joint mechanism,
- a first mirror movable portion pivotally connected to the mirror base portion by a first mirror joint;
- a second movable portion pivotally connected to the second mirror base portion by a second mirror joint;
- a third movable portion pivotally connected to the second mirror movable portion through a third mirror movable portions;
- a fourth mirror movable portion pivotally connected to the second mirror movable portion through a fourth mirror movable portions;
- wherein the axes of said first, second and third joints are in pairs mutually orthogonal and incident with each other in a same point of incidence, whereas the axis of said fourth joint is parallel to the axis of said third joint and passes through said point of incidence

wherein said means for transmitting the torque comprises:

- driven pulleys integral to the respective movable portions of said multi-joint mechanism;
- driven mirror pulleys integral to said mirror movable portions
- four inextensible tendons that are wound about said driven pulleys and on idle pulleys of the multi-joint mechanism and of the mirror mechanism, in order to provide corresponding mechanical independent transmissions, for transmitting torque that is generated on said driven mirror pulleys to the respective driven pulleys of the multi-joint mechanism, where the idle pulleys of the multi-joint mechanism and of the mirror mechanism deflect the inextensible tendons in such a way that the latter are always in contact with the idle and driven pulleys during all possible movements of said multi-joint mechanism,

and wherein said generation means for generating the balance forces comprise two independent torque generators, the first connected to the third movable portion at a point different from said point of incidence and the second connected to the fourth movable portion at a point different from said point of incidence.

In particular, such a mechanism can be used to provide an exoskeleton for the upper limb, comprising the abduction-adduction of the shoulder, the rotation of the shoulder, the bending of the shoulder and the bending of the elbow. In this case, the multi-joint mechanism has four degrees of freedom, but its kinematics is characterized by only two kinematic segments, and the second segment comprises the interaction element. In fact, the axes of the first three joints are incident at a point, the axis of the fourth joint is not passing through this point and the contact point of the interaction element does not fall on the axis of the last joint.

The mirror mechanism has the same number of joints of the multi-joint mechanism, the same relative direction of the axes of the joints and the same number of mirror segments.

The mirror mechanism is configured in such a way that its mirror segments are pivotally connected to the base portion of the multi-joint mechanism at the mirror joint. Vice-versa the multi-joint mechanism has only the first kinematic segment articulated to the base joint whereas the second kinematic segment has ends that are both movable.

Also in this case, transmission means preferably comprising idle and driven pulleys and inextensible tendons, are used to ensure that the direction of the kinematic segments of the multi-joint mechanism with respect to the first reference system are substantially the same as the directions of the corresponding kinematic segments of the mirror mechanism with respect to the second reference system.

In this example of applying the method for actuation that has the multi-joint mechanism two kinematic segments, two different torque generators are necessary, each of them associated with a single kinematic segment and connected both to the mirror mechanism and to the base portion of the multi-joint mechanism.

In a first exemplary embodiment of the mirror mechanism relative to the multi-joint mechanism having four joints, considered as example application of the method for operation of a feature of the invention, the fixed end of the two kinematic segments of the mirror mechanism coincide to each other and with the intersection of the first three joints of the mirror mechanism.

Advantageously, each two torque generators used comprises a spiral spring.

Always advantageously, the force intensity change means and force direction change means comprise a four motors, of which the first two are operated in a synchronous way for changing the intensity of the force and the other two are operated independently for changing its direction. In particular, each first two motors are associated with a single torque generator and are used for changing the distance of the first pulley with respect to the third pulley of the torque generator of own competence, whereas the other two are used for changing the segment that connects the axis of the first pulley with the axis of the third pulley of both torque generators.

Advantageously, at least one of the two axes of direction is made with a remote centre of rotation mechanism consisting of a circular guide. This way, is space has been freed for housing the torque generation mechanisms. In this case, the two torque generation mechanisms are arranged substantially fixed to each other in a central zone of said circular guide.

This way, the advantages concerning size and weights of the movable portions of the multi-joint mechanism are evident, since such elements must solely meet the structural needs and house the components of the mechanical transmissions (pulleys and tendons), whereas the components of operation both passive that operates are located remotely with respect to limb of the user.

In a second exemplary embodiment of the mirror mechanism relative to the multi-joint mechanism having four joints, considered as second example application of the method for operation of a feature of the invention, the fixed end of the two kinematic segments of the mirror mechanism does not coincide but are spatially distinct. This way, it is much easier the pattern of the torque generation mechanisms, since the possibility of interferences with each other during the movement of the multi-joint mechanism is reduced.

Brief description of the drawings

The invention will be now shown with the following description of an exemplary embodiment thereof, exemplifying but not limitative, with reference to the attached drawings in which:

- Fig. 1A shows a generic arm that rotates about a joint and on which a force is applied that is balanced by a spring loaded torque generation mechanism arranged between a predetermined point of the arm and a fixed support;
- Fig. 1B shows a spring loaded torque generation mechanism mounted to the arm of Fig. 1A and capable of providing a rest length equal to zero;
- Fig. 2 shows a generic arm of a multi-joint mechanism consisting of serial chain of n links made as the arm of Fig. 1A,
- Fig. 3 shows a multi-joint mechanism consisting of a serial chain of three links at the end of which a force is applied F,
- Fig. 4A shows a diagrammatical view of the actuating device according to the invention showing the multi-joint mechanism of Fig. 3 and a mirror mechanism connected to each other through transmission means;
- Fig. 4B shows an exemplary embodiment of the diagrammatical view of Fig. 4A with the addition of a force intensity change means to the mirror mechanism;
- Fig. 4C shows an exemplary embodiment of the diagrammatical view of Fig. 4A with the addition to the mirror mechanism of a force direction change means for changing the direction of the force;

- Fig. 4D shows an exemplary embodiment of the diagrammatical view of Fig. 4A with the addition to the mirror mechanism of force direction change means for changing the direction of the force and the intensity of the force;
- Fig. 5 shows a kinematic elementary scheme of a multi-joint mechanism with two degrees of freedom that can be balanced by the invention;
- Fig. 6 shows a mirror mechanism with two mirror segments and a transmission by means of pulleys for connecting the two mirror segments, in order to transmit forces and angles for example to the mechanism of Fig. 5;
- Fig. 7 shows a passive torque generator with traditional spring and zero rest length similar to that shown in Fig. 2;
- Fig. 8 shows a direction adjustment mechanism with two degrees of freedom, for changing the direction and/or the intensity of the force of the passive torque generator of Fig. 7;
- Fig. 9 shows the mirror mechanism of Fig. 6 with the passive torque generator of Fig. 7 and the mechanism for changing the direction and/or the intensity of the force of Fig. 8;
- Fig. 10 shows an anthropomorphic arm with four degrees of freedom and two unchanging segments;
- Fig. 11 shows a possible implementation of a mirror mechanism having the functions of a multi-joint mechanism operating as diagrammatically shown in Fig. 10;
- Fig. 12 shows a first passive torque generator for a mirror mechanism according to Fig. 11;
- Fig. 13 shows a second passive torque generator for a mirror mechanism according to Fig. 11;
- Fig. 14 shows a possible direction adjustment mechanism, which can be applied to a mirror mechanism according to Fig. 11;
- Fig. 15 shows the mirror mechanism of Fig. 11 with the passive torque generator of Fig. 13 and 13 and of the direction adjustment mechanism of Fig. 14;
- Fig. 16 shows an exoskeleton worn on an arm of an operator and with a backpack-like support for a mirror mechanism;
- Fig. 17 partially shows the exoskeleton of Fig. 16 with detail on the kinematic segments;
- Fig. 18 shows in detail the exoskeleton of Fig. 16.

Description of exemplary embodiments exemplary

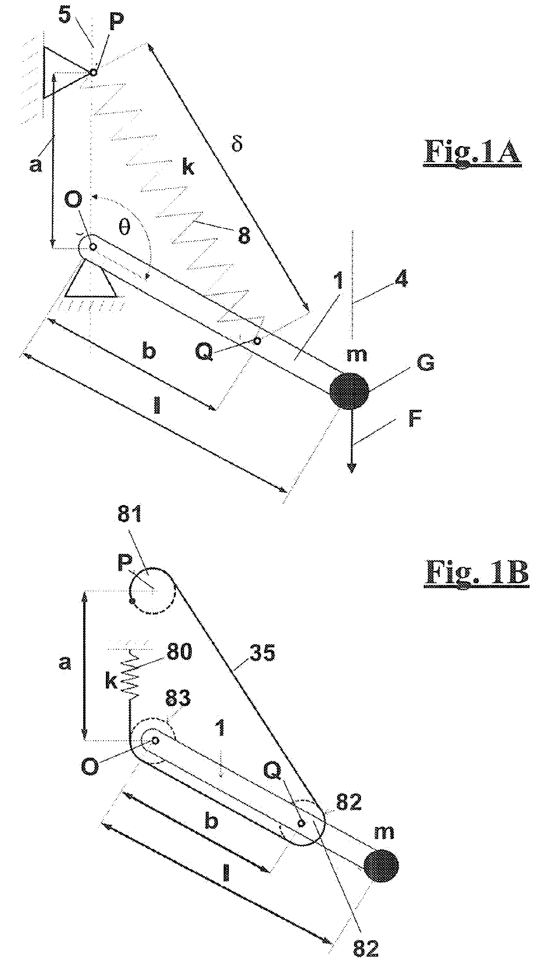

With reference to Fig. 1A, by considering a generic arm or segment 1 that has a joint O on which a force F at the point G acts, for example the weight of a mass m, a torque generation mechanism can comprise a spring 8 connected between:

- a point Q of the segment, connecting a joint O and the point G where the force F has to be generated;

it can be seen that in Fig. 1A said segment is arm 1, but it could be different from arm 1 if the latter is a rigid body having a shape different from a segment;
- a point P that falls on the line that passes through the joint O and parallel to the direction 4 of the force F that has to be generated; it is known that in Fig. 1A the force F is diagrammatically shown as the weight force of a mass m, but it can be a force of any direction 4.

An aspect of this configuration, already shown in the above cited article of Herder et al., is a balance independent from angle $\theta$ between the segment of arm 1 and the direction of segment OP parallel to direction 4. In fact, by arranging a force F at the point G which is distant I from point O, indicating with a and b respectively the segments OP and OQ, for balancing the rotation about point O it is necessary to fulfil the equation:

$$k^*a^*b = F^*I \; [1]$$

which is independent from $\theta$, provided that spring 8, whose stiffness is indicated as k, has zero rest length.

For making a torque passive generation mechanism that is based on such an advantageous principle, it is also possible to use, in a way shown in Fig. 1 B:

- a standard spring 80, i.e. a spring having rest length different from zero and provides a force proportional to its lengthening/ shortening;
- a tendon-pulley system comprising:

  - a pulley 81 at said point P,
  - a pulley 82 at said point Q,
  - a pulley 83 at said joint O,
  - a tendon 35 passing through each three pulleys 81-83, at one end connected to one of the pulleys, for example the pulley 81, and at the other end connected to the spring 80.

This way, the portion PQ has an elastic response of spring 80, and has rest length equal to zero, being it a portion of inextensible cable.

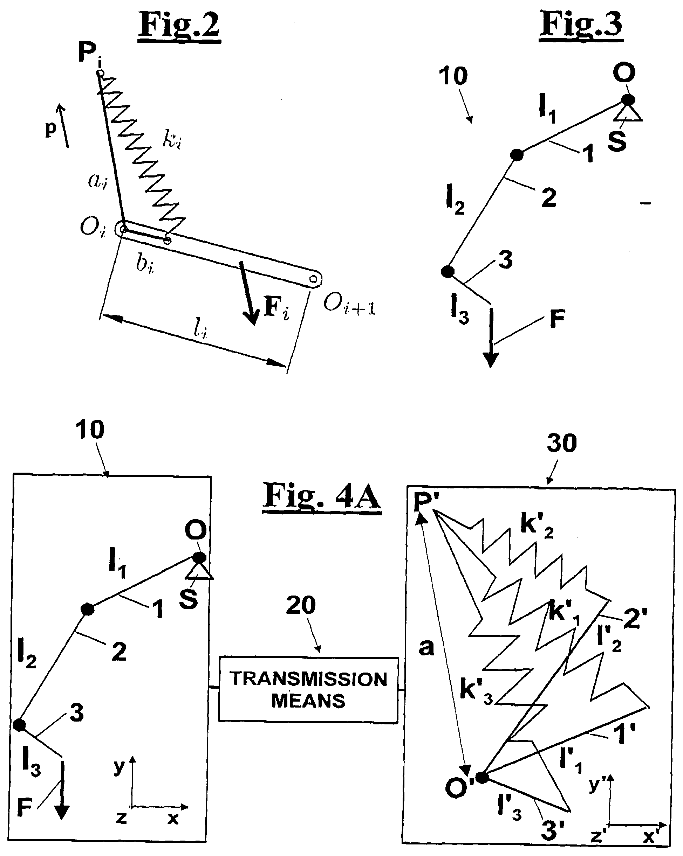

The diagrammatical view of Fig. 1A, and of equivalent Fig. 1B, can be extended to cases of multi-joint mechanisms consisting of serial chains with n links like that shown in Fig. 2. Such generic link of a serial chain has length li, with i from 1 to n, and to it a generic force can be applied for balancing $F_1$ at its generic point.

Such multi-joint mechanisms can be balanced globally using for each link a spring, mounted in the first described mode, having elastic constant $k_i$ suitably calculated. In particular, if to the multi-joint mechanism a single force F is applied to a predetermined segment, for example an end-effector arranged on an end segment of the serial chain, each elastic constant ki can be obtained by formulas [1].

Following this scheme, however, for each segment i of said serial chain with a same configuration, it would be necessary that the respective points Pi of each segment that is located at a distance $a_l$ on the line that passes through the respective joint $O_i$ and parallel to the direction of the force $F_i$ that has to be generated, and that this direction is fixed versus the configuration of the chain. All these conditions are very complex to carry out in practice, since it would be necessary to fulfil them for each configuration of the multi-joint mechanism. Therefore, for a generic multi-joint mechanism this condition is valid only theoretically.

In fact, also in a simple case like Fig. 3, which is a multi-joint mechanism 10 that has a base portion S, a first joint O and three links, 1, 2, 3 of length l1 l2, l3, which form a serial kinematic chain, with force F applied for example at the end of the link 3, for example at an interaction element not shown, said passive balancing scheme would difficult to apply, even in the hypothesis that the force F acting on the link 3 is fixed in direction and intensity.

According to the invention, in Fig. 4A a method for operation and a relative device, which solves said problem, is diagrammatically shown.

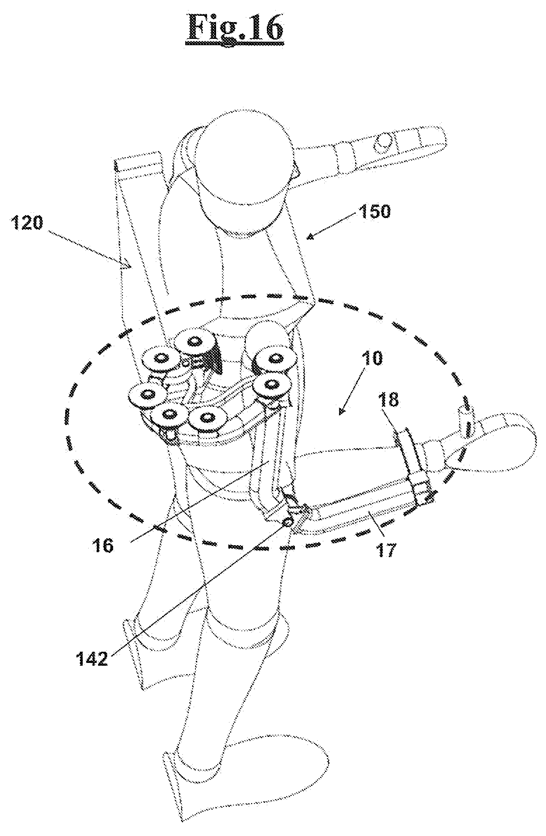

The multi-joint mechanism 10, simplified to a number of three links as shown in Fig. 3, comprises a support and a plurality of segments $l_1, l_2, l_3$ connected to each other, in order to impart to the multi-joint mechanism a predetermined number of degrees of freedom, and connected by a joint articulated to a support not shown, for example the origin of segment $l_1$, which defines a first reference system x, y, z. It further comprises a portion, for example the end of the link 3, arranged to bear a load F with a predetermined direction of load at the interaction portion. Such interaction portion can be for example the end-effector of a robotic arm, for example as shown in Fig. 16.

As kinematic segments of the multi-joint mechanism, links, which have lengths $l_1, l_2, l_3$ unchanging with the movement of the multi-joint mechanism and which connect a point integral to the support and the predefined application point of the load, for example the contact point of a multi-joint exoskeleton with a user's limb.

A method for operation according to the invention (Fig. 4A) comprises, in a first step, prearranging a "mirror mechanism" 30 comprising a number of mirror segments $l'_1, l'_2, l'_3$ which is the same number as the segments 1, 2, 3 of the multi-joint mechanism 10. The mirror mechanism 30 has a corresponding mirror joint O' connected to a second support that defines a second reference system x', y', z'. In addition, a connection means 20 is provided between the multi-joint mechanism 10 and the mirror mechanism 30 that maintains the direction of each kinematic segment $l_1, l_2, l_3$ constant with respect to the first reference system x, y, z equal to the direction of each mirror segments $l'_1, l'_2, l'_3$ with respect to the second reference system x', y', z', for each movement of the multi-joint mechanism with respect to the joints. For example, the connection means can be pulleys and tendons, which permit a replication of the movement of segments $l_1, l_2, l_3$ by the mirror segments $l'_1, l'_2, l'_3$.

A next step provides then generating a system of balance forces on the mirror mechanism 30, so that such forces are transmitted to the multi-joint mechanism 10 by the transmission means 20. Such forces are supplied by springs of suitable elastic constants k1, k2, k3. In the diagrammatical view of Fig. 4A, it is possible to balance a fixed force F acting at a point of the third link of a multi-joint mechanism 10, for any orienting the link $l_1, l_2, l_3$, prearranging a mirror mechanism 30 with mirror links $l'_1, l'_2, l'_3$ which:

- have size proportional to the links $l_1, l_2, l_3$;
- have the same distance a between origin common O' from point P';
- have directions with respect to the reference system x'y'z' substantially the same as links $l_1, l_2, l_3$ with respect to reference system xyz;
- are subjected to passive forces given by springs k1', k2', k3' that follow equation [1] and have a zero rest length;
- provide to links $l_1, l_2, l_3$ through the transmission means the balance forces generated by the springs.

By using existing springs, which cannot have a zero rest length, the physical principle is not always fulfilled. However, using the scheme of Fig. 1B for generating a passive balancing force, the behaviour is like as if the rest length of the spring is zero, fulfilling the equation [1].

It should be noted that the mirror links do not require necessarily the same length as the links of the multi-joint mechanism. This permits to reduce the size of the mirror mechanism 30 with respect to the multi-joint mechanism 10, reaching a correct compromise between the elastic constant of the springs and the length of the mirror links.

In case the force F is not fixed, and it can change its direction and/or in intensity, it is possible to provide a force intensity change means for changing the intensity of the force, or a force direction change means for changing the direction of the force, or both, which change respectively the distance a which corresponds to the length O'P', or the direction of segment O'P', or both. In fact, as above said, in order to apply equation [1], it is necessary that the force that has to be balanced is parallel to the direction of segment OP, and distance OP is fixed. If the force changes its intensity or direction, the distance OP or its direction must be adjusted therefore.

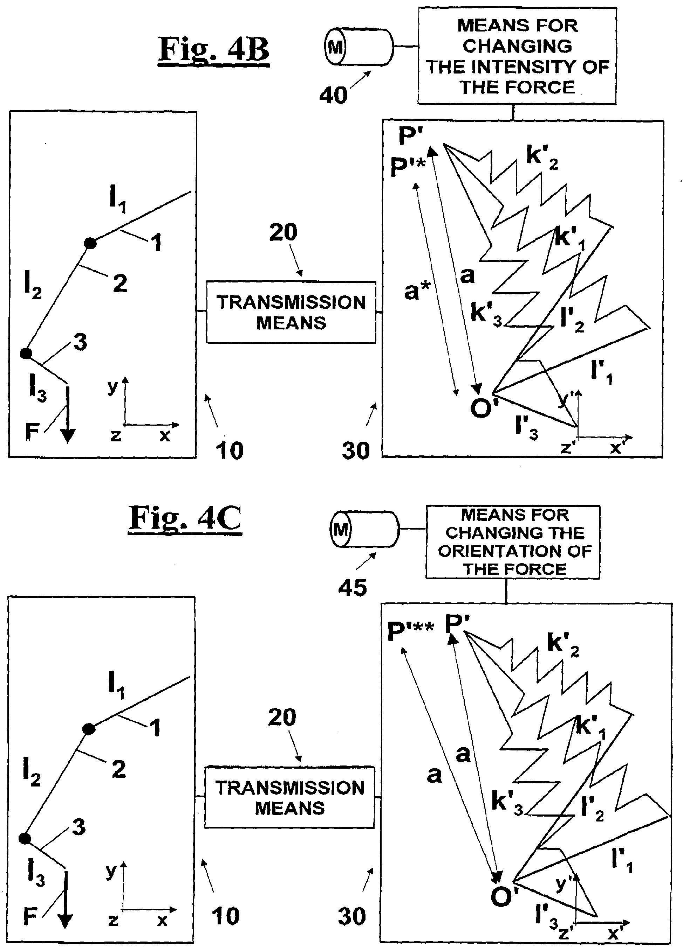

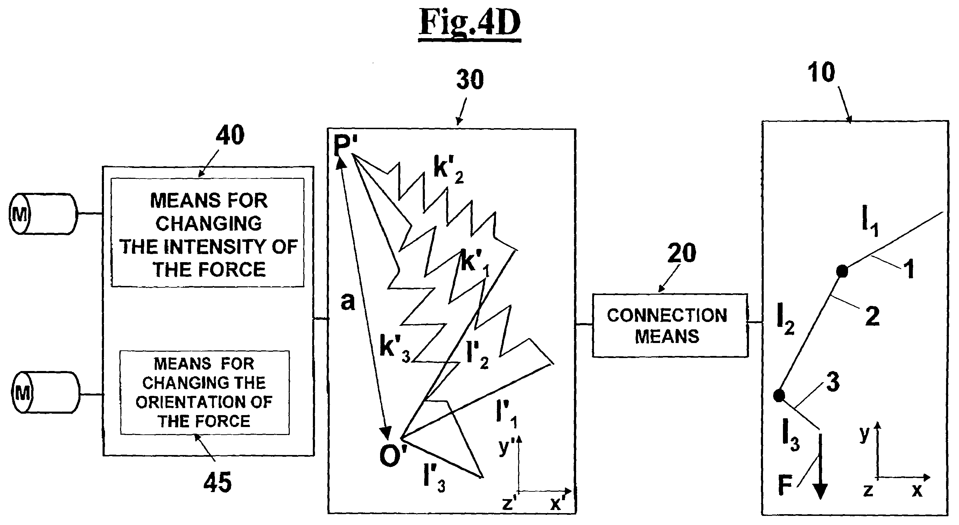

In particular, as shown in Figs. 4B, 4C, 4D, a step can be provided of actuated adjustment through an actuation means selected from the group consisting of:

- a force intensity change means for changing the force 40 (Fig.4B), which move point P' to point P'*

with respect to O', without changing the original direction of O'P',

- a force direction change means for changing the direction of the force 45 (Fig.4C), which change the direction of O'P' without adjusting the distance of P' with respect to O', move the point P' at a point P'**;
- a combination thereof (Fig.4D) for changing both the direction of O'P' and the distance of P' with respect to O', as above defined.

This way, the mirror mechanism 30 provides to the multi-joint mechanism 10 the required balance forces, both where the forces to balance are constant in direction and intensity, and where the intensity and/or the direction of the force to balance change, such as a load with variable intensity and/or direction. The diagrams of Figs. 4A-4D can be implemented avoiding the theoretical difficulties described above, for balancing with passive forces the loads acting on a multi-joint mechanism. Furthermore, the diagrams of Figs. 4A-4D are applied for any number of links of the kinematical serial chain of the multi-joint mechanism.

The balance forces are generated completely by passive elements, i.e. for example springs $k'_1$, $k'_2$, $k'_3$, and are transmitted by the mirror mechanism 30 to the segments of the multi-joint mechanism 10 by the transmission means 20, made up of example by tendons and by pulleys.

For the variation of the intensity of the force and/or the direction of the force respective actuation means 40 and 45 of Figs. 4B, 4C, 4D can be used, for example motors. It should be noted that such motors do not render the mirror mechanism an active mechanism. In fact the actuation means 40 and/or 45 move only point P', without generating any balance forces, which are always generate, as shown in the examples, by springs and transmitted by pulleys and by tendons. Even if motors are provided, they are organisms for controlling the system, and not actuators, which generate balancing forces or torque.

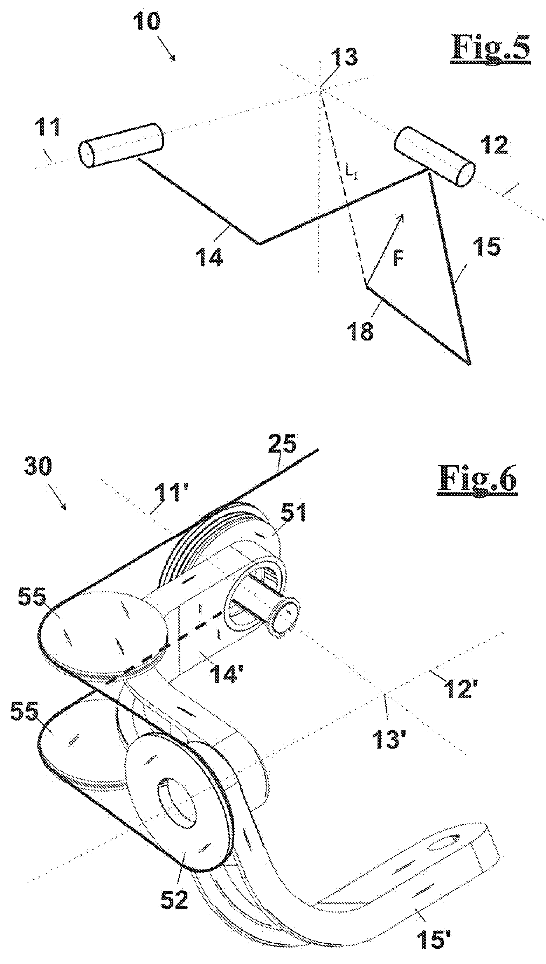

With reference now to Fig. 5, an elementary kinematic arrangement of a multi-joint mechanism 10 is shown having two degrees of freedom, that can be balanced by the invention. In this case, for simplicity, a first axis 11 and a second 12 axis show two degrees of freedom of the generic multi-joint mechanism 10, that are mutually orthogonal and incident with each other at a point 13. The first axis 11 rotates about a base joint that is integral to a base portion not shown.

With reference to Fig. 6, for balancing force F according to an embodiment of the invention, instead of arranging a passive balancing means on the multi-joint mechanism 10, it is possible to make a mirror mechanism with two corresponding mirror segments 14' and 15', and to connect the two mirror segments 14' and 15' to each other, in order to transmit to segments 14 and 15, with tendons and pulleys, the same angles described by mirror segments 14' and 15'.

In particular, Fig. 6 shows the mirror segments 14' and 15' that can be connected to the relative links of the multi-joint mechanism 10 of Fig. 5, with the mirror links rotatably arranged about axes 11' and 12', which are incident at the centre of joint 13'.

In particular, four tendons or tendons 25 are provided, two for each degree of freedom, which develop from the multi-joint mechanism 10 in a way not shown, while in Fig. 6 for simplicity only one is shown. More in detail, the tendons 25 relative to the first degree of freedom 11 of the first segment 14 of the multi-joint mechanism 10 of Fig. 5 guide the first pulley 51 relative to the first degree of freedom 11' of the mirror mechanism 30. Similarly, the tendons relative to the second degree of freedom 12 of the second segment 15 of the multi-joint mechanism 10 guide the second pulley 52 relative to the second degree of freedom of the mirror mechanism 30, and are guided by further idle pulleys 55. Therefore, each driven pulley 51 and 52 is connected to a segment, respectively 14 and 15, so that the whole kinematic directions are replicated.

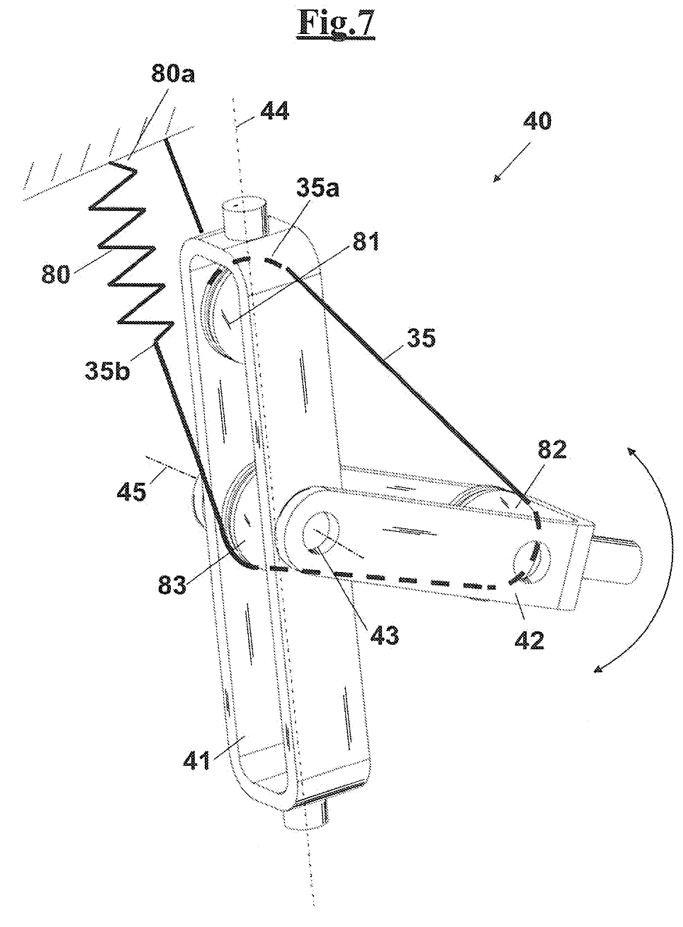

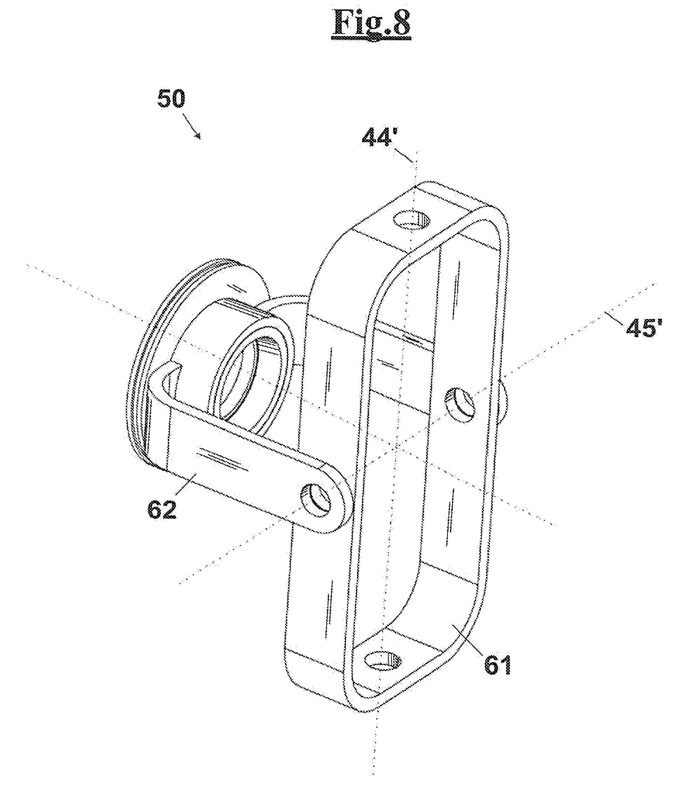

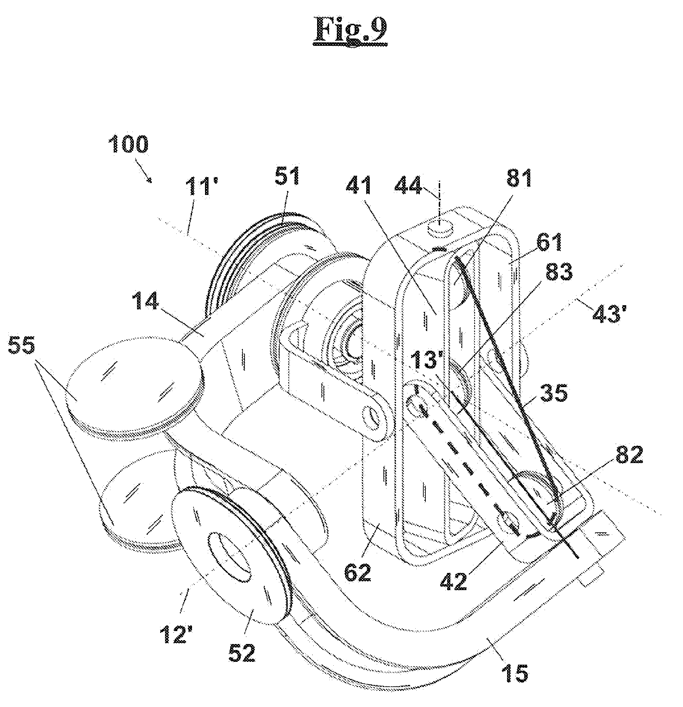

The mirror mechanism can require a passive torque generator 40 (Fig. 7) and can comprise a direction adjustment mechanism (Fig. 8) having two degrees of freedom, for changing the direction and/or the intensity of the force according acting on the link 15, for example the end-effector of a robotic limb, to obtain eventually mirror mechanism 30 of Fig. 9.

The passive torque generator 40, as shown in Fig. 7, is a mechanism that can be implemented to generate the torque demand for balancing the external force F of Fig. 5. In particular, the torque generator 40 is comprised of two stiff segments 41, 42 articulated at point 43 about its axis 45.

With reference to Fig. 7, the segment 41 can rotate freely with respect to a fixed frame not shown, about a rotation axis 44 whose direction corresponds to that of force F. The rotation axis 44 and the rotation axis 45 (which are perpendicular to each other), and the axis of the inner rotation torque defined by the segment 42, cross each other at the centre 13' of the complete mirror mechanism 100, as shown in Fig. 9,

Furthermore, similarly to the diagrammatical view of Fig. 1B, the torque generator 40 of Fig. 7, comprises three pulleys 81, 82 and 83 arranged at the vertices of a triangle. In addition, the movable pulley 81 can translate along the direction of the rotation axis 44, for changing the intensity of the force, whereas the fixed idle pulley 83 has an axis aligned with the axis 45 and the movable pulley 82 has an axis that can rotate about its axis 45 of the second stiff segment 42.

An inextensible tendon 35 is connected at a first end 35a to the movable pulley 81 whereas at the opposite end 35b it is connected to a resilient element 80. The resilient element 80 is in turn connected at an end 80a, opposite to the end 35b, to a point that is integral to the first stiff segment 41.

The direction of the rotation axis 44 of the torque generator 40, when mounted in the complete mirror mechanism 100 of Fig. 9, can be changed using the direction adjustment mechanism 50 of Fig. 8, which is comprised of two stiff connection members 61 and 62 articulated about an axis 45'. The first connection member 61 can rotate with respect to a fixed frame, not shown, about its axis 44' that is aligned with the first axis 44 of the mirror mechanism of Figs. 7 and 9. Then, the direction adjustment mechanism 50 has two degrees of freedom and can be operated by two independent motors, not shown in the figures, for changing the direction of the force on the end-effector of the robotic limb.

Combining all the elements of Figs. 6-8, the complete mirror mechanism is obtained 100 as a global system of operation of passive balance forces, as shown in Fig. 9.

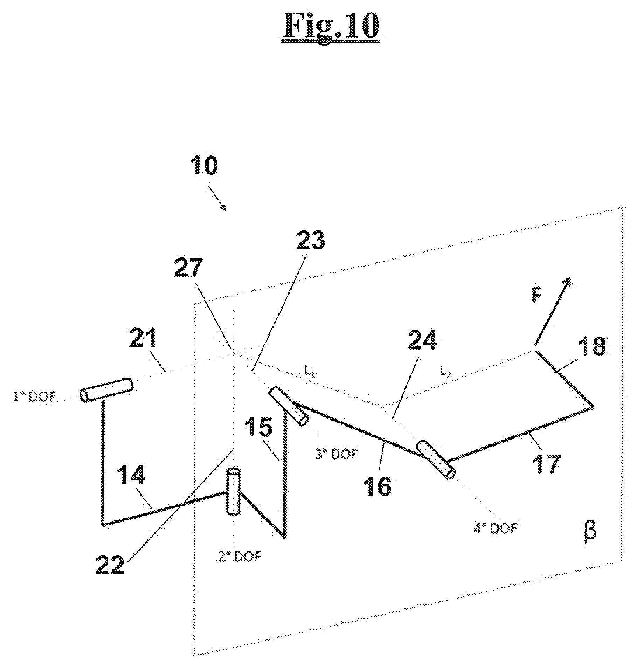

Always according to the invention, it is possible to balance an anthropomorphic arm 10 with four degrees of freedom as diagrammatically shown in Fig. 10. The multi-joint mechanism 10 can for example repeat the abduction-adduction movements of the shoulder, i.e. axis 21, the rotation of the shoulder, i.e. axis 22, the bending of the shoulder, i.e. axis 23, and the bending of the elbow, i.e. axis 24. It is, furthermore, pointed out that axes 21, 22, 23 of the first three degrees of freedom have a common point 27, i.e. the centre of the shoulder. Then, only two stiff segments 16 and 17 are enough for connecting fixed common point 27 with the end effector, and therefore such segments represent two kinematic segments of non-zero length. The first axis 21 rotates about a base joint that is integral to a base portion, not shown.

The kinematics shown in the present Fig. 10 depicts a single plane $\beta$ that contains the shoulder articulation 27 and the end-effector 18 of the segment 17 where the force F is applied, and then also the kinematic segments as 16 and 17, which have length $L_1$ and $L_2$ unchanging with respect to the movement of the multi-joint mechanism 10.

Since each kinematic segment 16 and 17 serves to the variation of the potential energy with respect to the force applied to the end-effector 18, even if the arm has four degrees of freedom, according to the invention, in the mirror mechanism 30 only two passive elements are required, in this case springs, one for each kinematic segment.

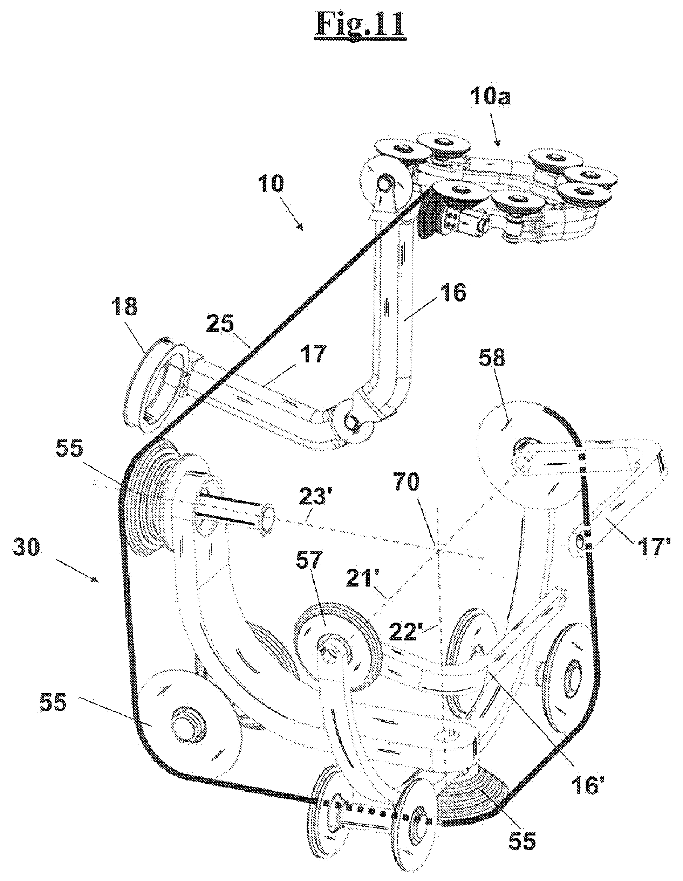

In the figures 11-15 a possible implementation of a mirror mechanism is shown having the functions diagrammatically indicated in Figs. 4A-4D for a multi-joint mechanism as that diagrammatically shown in Fig. 10.

The multi-joint mechanism can be provided as a robotic limb 10 (Fig. 11), consisting of a first link 16 and a second link 17, which ends with an end-effector 18, where a user can for example put the hand or the wrist.

From arm 10, described in more detail hereinafter, connection tendons 25 can develop, of which one only shown, guided by means of pulleys, directed towards the mirror mechanism 30, which replicates the limb. The idle pulleys 55 allow to the tendons or tendons 25 to reach the drive mirror pulleys 57 and 58 relative to each degree of freedom, with reference to the centre of the mechanism and to the mirror segments 16' and 17'.

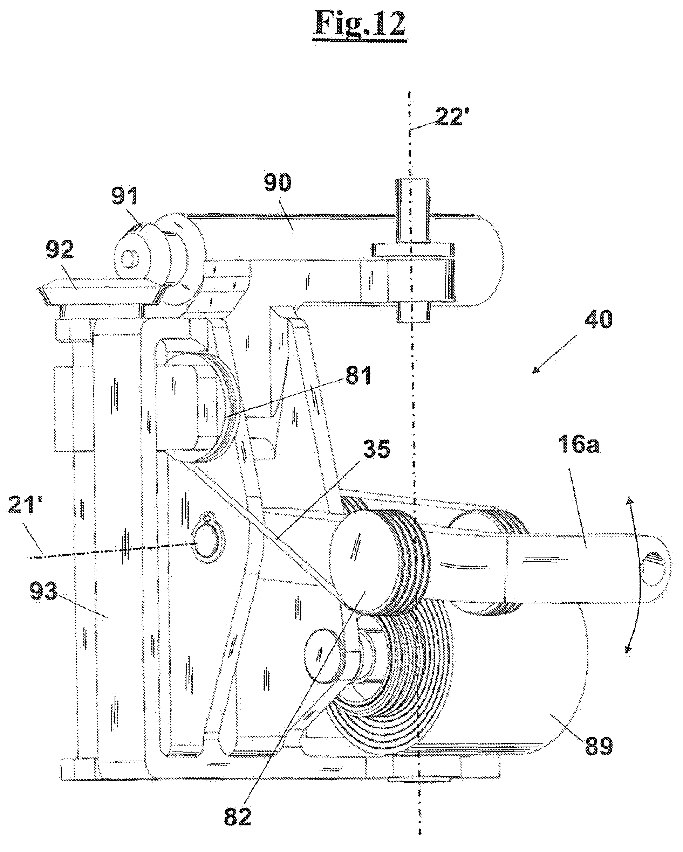

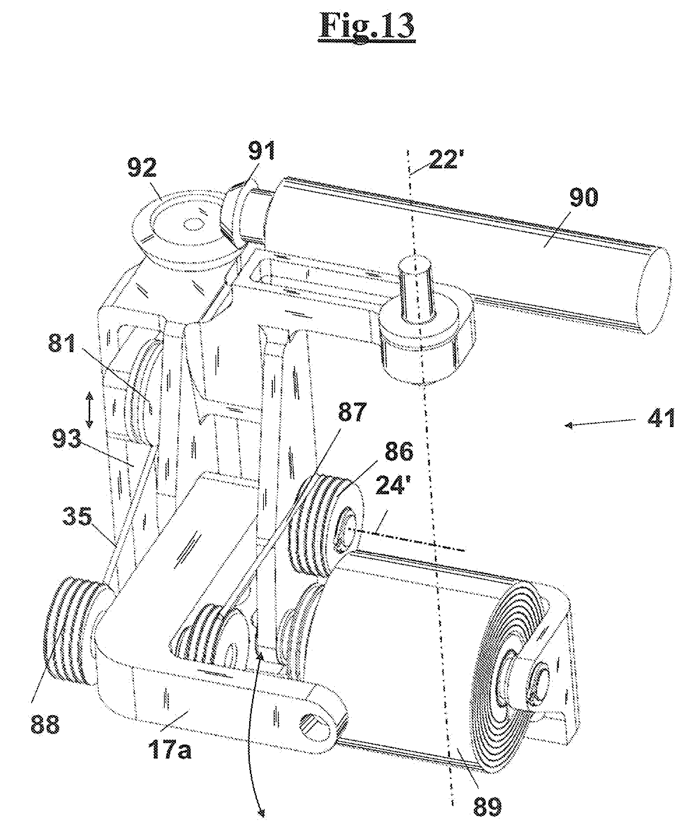

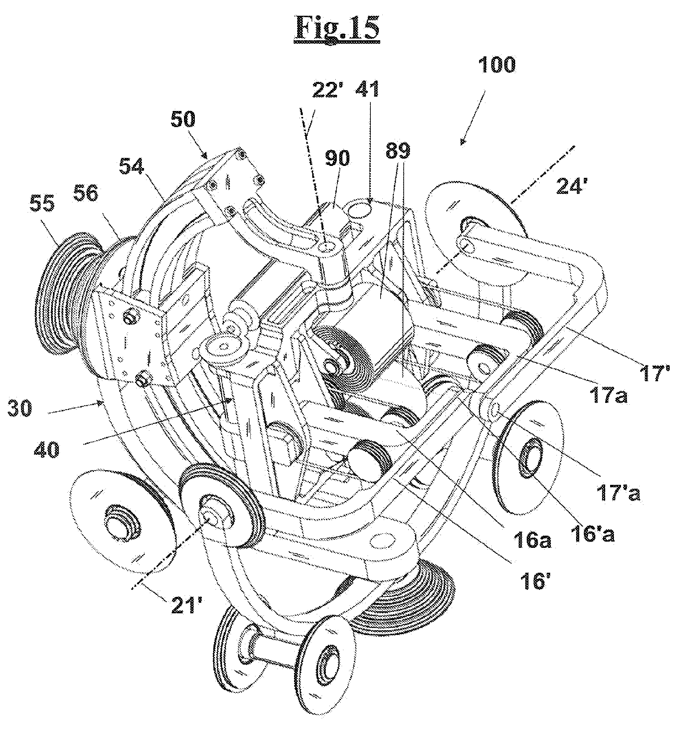

In the mirror mechanism 30 of Fig. 11, that is designed for the multi-joint mechanism 10, a space for housing two passive torque generators is provided, one for each mirror segment, shown in more detail in Figs. 12 and 13, where they are indicated as 40 and 41, and shown in an assembled way in Fig. 15.

With reference to Figs. 12 and 13, a passive torque generator 40, 41, for reasons of space and size, provides a spiral spring 89 instead of a linear spring. Obviously the passive torque generators 40 and 41 maintain the same concepts exposed, for the purpose of computing the elastic constant k for passive torque generator, according to the above equation [1]. In particular, the arms 16a and 17a of Figs. 12 and 13 are arranged to rotate respectively about axes 21', 24' that in the assembled configuration of Fig. 15 are the same as arms 16'and 17'.

In particular, in the assembled configuration of Fig. 15, the arms 16a and 17a of the mechanisms 40 and 41 are constrained to the respective ends of the arms 16' and 17' by means of respective spherical couplings 16'a and 17'a. The passive torque generators 40, 41 allow also the adjustment of the intensity of the force. In fact, the movement of the movable pulley 81 allows the adjustment of distance value a, and can be obtained for example by a motor 90 that supports two conical gearings 91 and 92 connected to an adjustment screw 93, to which movable pulley 81 is connected. Owing to the system of tendons and pulleys 35, 81, 86, 87, 88 a spring having zero rest length is obtained, similar to that of Fig. 1A, even if, as shown in Figs. 12 and 13, the pulleys 86 and 88 lay on two different planes. This way, it is possible, with minimum encumbrance, to displace the movable pulley 81, in order to have a value of force of any sign positive, negative or zero.

The space between the motor 90 and the spring 89 makes it possible to assemble two passive torque generators 40, 41 in overturned position with respect to each other. In fact, in the space of one of the two generators the spring 89 of the other of the two torque generators is housed, as shown in Fig. 15.

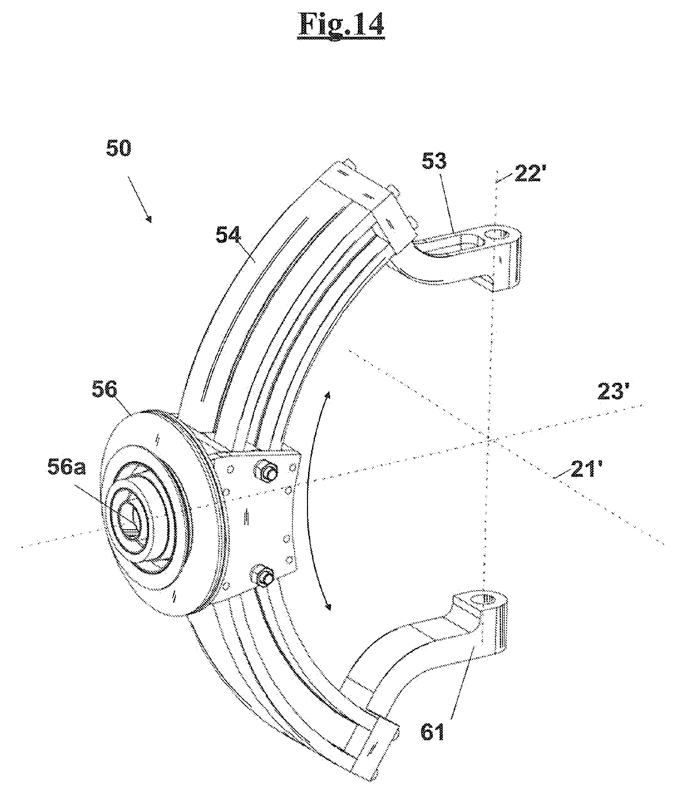

In Fig. 14 a possible direction adjustment mechanism 50, is shown which provides the two degrees of freedom, in order to set the predetermined direction of the forces. The axis of first direction 22' is obtained in a "standard" way, with a support 53 to provide the relative joint, whereas the second axis 21' is made by a circular guide 54, on which a carriage 56 slides, with a housing 56a for pulleys, for leaving free the space about the second axis 21', for housing the two torque generators 40, 41.

By combining the mirror mechanism 30 of Fig. 11, the two torque generators 40, 41 of Figs. 12 and 13, and the direction adjustment mechanism 50 of Fig. 14, the complete mirror mechanism 100 of Fig. 15 is obtained, as global system of operation of passive balance forces for two kinematic segments with four degrees of freedom.

From a general point of view, the mechanism 100 of Fig. 15 as a system of operation of passive balance forces is formed by several elements that move relatively to each other responsive to the movement of the robotic limb. The movement of segments 16' and 17' about axes 21', 22', 23' and 24' provides an exoskeleton in the form of a multi-joint arm 10 capable of following most of the movements of a human arm, allowing sufficiently wide excursions for each degree of freedom without possibility of interference between each other and for any configuration of the robotic limbs and of the mechanism for changing the direction of the forces.

The mechanism 100 of Fig. 15 occupies a minimum encumbrance, and it is therefore easily portable by a user that wears a multi-joint mechanism as exoskeleton, and can be easily carried for example in a support, for example a backpack 120, as shown in Fig. 16.

With reference to Figs. 16 to 18, an example is shown of an exoskeleton wearable on an arm of an operator that comprises a support portion 120 integral to the chest 155 of a human operator 150, i.e. a backpack support portion 120 that does not move with respect to the chest (link 0). Furthermore, the exoskeleton comprises a first movable element 14 for the rotation with respect to the support portion 120 about a first axis 101 that passes substantially through the articulation of the shoulder, in the case of the arm, or through the articulation of the hip, in the case of the leg (not shown). In particular, the first axis 101 is substantially orthogonal to the transversal plane of the chest 155, i.e. substantially orthogonal to the plane that passes substantially through the centres of the joints of the shoulders, for the upper limbs, and through the centres of the joints of the hip, for the lower limbs.

Furthermore, the exoskeleton comprises a second movable element 15 for the rotation with respect to the first movable element 14 about a second axis 102 that passes substantially through the articulation of the shoulder, for the upper limbs, or through the articulation of the hip, for the lower limbs, and that is substantially orthogonal to the first axis 101 of the first movable element 14 with respect to the support portion 120. In particular, the exoskeleton makes it possible to cause the rotation of the second movable element 15 with respect to the first movable element 14 by a remote center-of-motion mechanism.

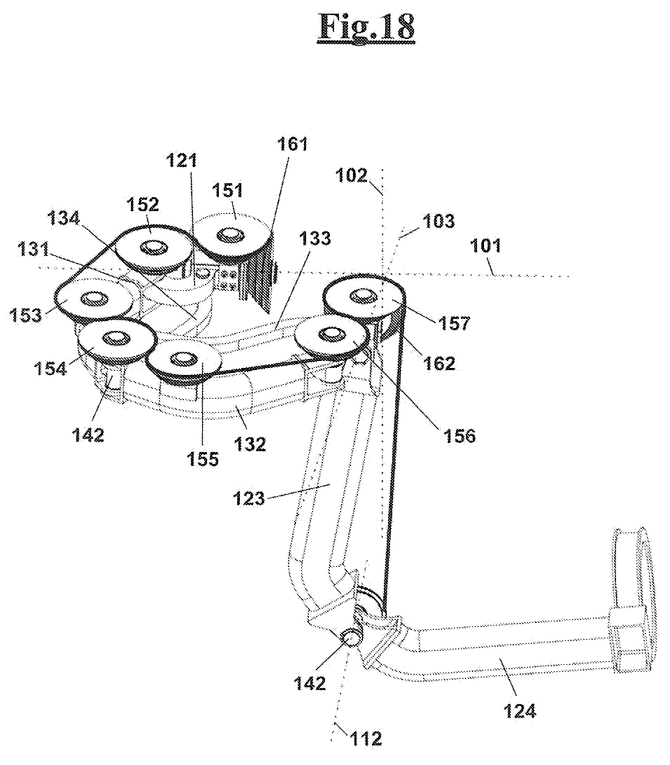

For example, the remote center-of-motion mechanism can be based on two four-bar linkages connected to each other, as shown in Figs. 16 and 18.

In particular, the four-bar linkages are made up of four stiff segments 131, 132, 133 and 134, which are articulated to each other and to the first movable element 14 and the second movable element 15, through a plurality of joints 141, 142, 143, 144, 145, 146, 147. Each joint comprises a respective rotation axis parallel to the second axis 102 of the second movable element 15 with respect to the first movable element 14.

A first stiff segment 131 of the four stiff segments 131, 132, 133 and 134 can rotate with respect to the first movable element 14 by a first joint 141.

A second stiff segment 132 can rotate with respect to the second movable element 15 by a second joint 142. The second movable element 15 can rotate with respect to the second stiff element 132 by a third joint 143.

A third stiff segment 133 of the above described four stiff connections, can rotate with respect to the second movable element 15 by a fourth joint 144 and can rotate with respect to the first stiff segment 131 by a fifth joint 145.

A fourth stiff segment 134 can rotate with respect to the first movable element 14 by a sixth joint 146 and can rotate with respect to the second stiff segment 132 by a seventh joint 147.

The rotation axes of the first and sixth joints 141 and 146 and the first 101 and second axis 102 of the first and second movable elements 14 and 15 belong to a first plane.

The rotation axes of the third and fourth 144 joints 143 and 144 and the rotation axis 101 of the first movable element 14 with respect to the second movable element 15 belong to a second plane.

The distance between the first joint 141 and the second joint 142 is the same as the distance between the third joint 143 and the first axis 101 of the first movable element 14 with respect to the second movable element 15.

Furthermore, the distance between the sixth joint 146 and the seventh joint 147 is the same as the distance between the third joint 143 and the rotation axis of the first movable element 14 with respect to the second movable element 15.

Still, the distance between the second joint 142 and the third joint 143 is the same as the distance between the first joint 141 and the rotation axis of the first movable element 14 with respect to the second movable element 15.

Finally, the distance between the fifth joint 145 and the fourth joint 144 is the same as the distance between the first joint 141 and the rotation axis of the first movable element 14 with respect to the second movable element 15.

In particular, as shown in Fig. 16, the exoskeleton comprises a third movable element 16 that can move with respect to the second movable element 15 about a third axis 103 that passes substantially through the articulation of the shoulder, for the upper limbs, or through the articulation of the hip, for the lower limbs. The third axis 103 is substantially orthogonal to the rotation axis 102 of the second movable element 15 with respect to the first movable element 14.

In addition, the exoskeleton comprises a fourth movable element 17 that can move with respect to the third movable element 16 about a fourth axis 104 that passes substantially through the articulation of the shoulder, for the upper limbs or through the articulation of the hip for the lower limbs. The third axis 103 is substantially parallel to the rotation axis 102 of the third movable element 16 with respect to the second movable element 15.

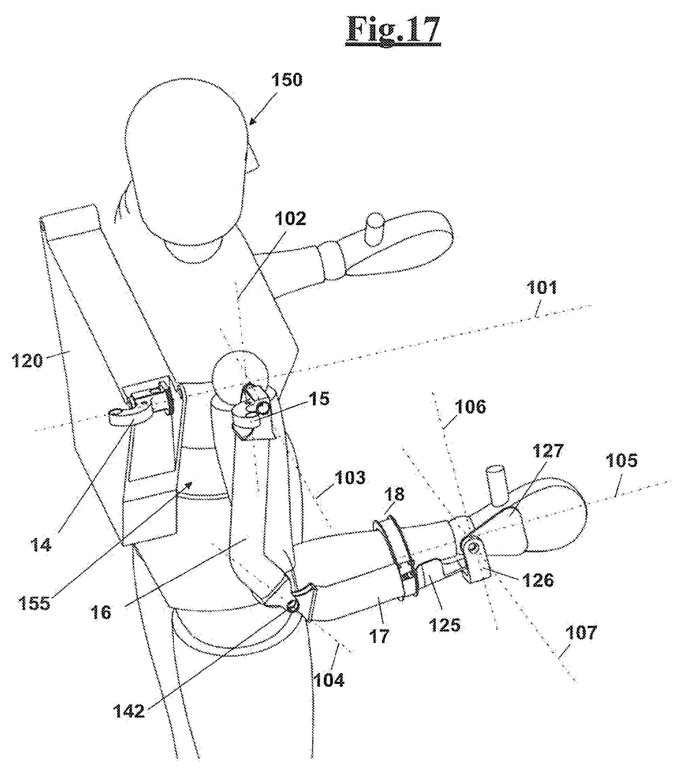

In particular, (Fig. 17) the exoskeleton for the upper limbs can provide a fifth movable element 125 that can move with respect to the fourth movable element 124 about a fifth axis 105 that passes substantially through the articulation of the elbow and is substantially aligned with the main direction of the forearm.

A sixth movable element 126 can be also provided that can move with respect to the fifth movable element 125 about a sixth axis 106 that passes substantially through the articulation of the wrist and is substantially orthogonal to the axis 105 of the fifth movable element 125 with respect to the fourth movable element 17.

A seventh movable element 127 can be also provided that can move with respect to the sixth movable element 126 about a seventh axis 107 that passes substantially through the articulation of the wrist substantially orthogonal to the axis 106 of the sixth movable element 126 with respect to the fifth movable element 125.

The exoskeleton has a workspace that does not limit minimally the natural workspace of the human limbs, and has an actuation system, for example the complete mirror mechanism 100 of Fig. 15, which can be located remotely in the backpack 120, without minimally creating encumbrance in the workspace.

The complete mirror mechanism 100 with the lighter motors necessary only for changing the distance and the application point of the passive torque generators 40 and 41, is easily portable in the backpack 120 by the user 150 without high effort. Owing to the exoskeleton and to the mirror mechanism with passive torque generators present in the backpack 120, the forearm of the user is completely supported for any direction and intensity of the force acting on the end-effector 18.

A sensor means (not shown) can be provided for sensing the intensity and the direction of the force acting on the end effector and a control means (not shown) can be provided for changing the intensity and direction of the balance forces responsive to signals coming from the sensor means. In this case, for any forces acting on the end effector 18, the user is instantly and automatically raised by this force, in order to apply with efficiency the invention in cases of Rehabilitation Robotics, assistive Robotics and Material Handling Robotics.

The foregoing description of specific exemplary embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the Field of the invention. It is to be understood that the phraseology or terminology that is employed herein is for the purpose of description and not of limitation.

**Claims**

1. An actuating device for a multi-joint mechanism,

   said multi-joint mechanism (10) comprising:

      - a base portion (S);
      - a base joint (O) that has a rotation axis (11, 21) that is integral to said base portion (S) and defines a first reference system (x, y, z) integral to said base portion (S);
      - an interaction portion (18) arranged to provide to a user's limb a contact point, at which an interaction force is applied to said limb (F) that has a predetermined intensity and direction with respect to said first reference system;
      - a predetermined number of movable portions (1, 2, 3, 14, 15, 16, 17) connected to each other by means of joints (21, 22, 23, 24, 101, 102, 103), in order to form a serial kinematic chain starting from said base joint (O),
      wherein the first movable portion (1, 21) is connected to said base portion (S) by said base joint (O) and the last movable portion (3, 24) is integral to said interaction portion (18),
      wherein each of said movable portions (1, 2, 3, 14, 15, 16, 17) comprises a kinematic segment whose length is invariant upon movement of said interaction portion (18) with respect to said base portion (S),
      wherein each kinematic segment is the shortest segment connecting a first axis with a second joint axis of adjacent joints of a movable portion or, in case of the last movable portion, said kinematic segment is a segment located between the last joint and said contact point of said interaction portion (18);

   wherein said actuating device comprises:

      - a mirror mechanism (30) comprising:

         - at least one mirror joint (O') integral to said base portion (S), defining a second reference system (x', y', z') integral to said base portion (S),

- a number of mirror movable portions and, respectively, of mirror kinematic segments (14', 15', 16', 17'), which is the same number as the movable portions and the same number as the kinematic segments of said multi-joint mechanism (10), each mirror kinematic segment being pivotally connected to said base portion (S) at one end thereof and to said mirror joint and have a length that is proportional to the length of the corresponding kinematic segment of the multi-joint mechanism (10), according to a same proportionality factor for all the kinematic segments;

- a balance force generation means (k'1, k'2, k'3, 40, 80, 89) for generating a system of balance forces acting on said mirror kinematic segments (14', 15', 16', 17'),
- a transmission means (25) that is located between said multi-joint mechanism (10) and said mirror mechanism (30),

wherein said transmission means (25) is configured to:

- maintain the direction of each kinematic segment (1, 2, 3, 14, 15, 16, 17) of said multi-joint mechanism (10) with respect to said first reference system substantially the same as the direction of each of said mirror kinematic segments (1', 2', 3', 14', 15', 16', 17') with respect to said second reference system, for any possible movements of said interaction portion (18) with respect to said base portion (S),
- transmit said system of balance forces from said mirror mechanism (30) to said multi-joint mechanism (10), in such a way that said interaction force (F) applied at said contact point of said interaction portion (18) is balanced by said balance forces.

2. The actuating device according to claim 1, wherein said balance force generation means that generates a system of balance forces comprises a means selected from the group consisting of:

- a force intensity change means responsive to variations of the intensity of a load acting on said interaction portion (18);
- a force direction change means for changing the direction of said force responsive to variations of the direction of a load acting on said interaction portion (18);
- a combination thereof.

3. The actuating device according to claim 2, wherein said balance force generation means comprises a passive resilient element associated with a predetermined mirror kinematic segment, said passive resilient element having a first and a second end, wherein said first end is connected to the mobile end of said mirror kinematic segment and said second end is connected to a support element integral to said base portion (S) of the multi-joint mechanism (10).

4. The actuating device according to claim 2, wherein said force intensity change means comprises a first means for moving said support element with respect to said base portion (S) and said force direction change means comprises a second means for moving said support element with respect to said base portion (S), in particular said first means for moving said support element with respect to said base portion (S) being arranged to change the distance between said first and said second ends.

5. The actuating device according to claim 4, wherein said second means for moving said support element with respect to said base portion (S) is arranged to change the direction of a line that passes between said first and said second ends.

6. The actuating device according to claim 1, wherein said balance force generation means comprises torque generation mechanisms in the same number as said kinematic segments that have a non-zero-length, wherein each of said torque generation mechanisms:

- is mechanically connected to said mirror mechanism (30) and to said force intensity change means and/or said force direction change means;
- is equipped only with passive resilient elements,
- is associated to a specific kinematic segment of said mirror mechanism.

7. The actuating device according to claim 1, wherein said transmission means (25) comprises a plurality of inextensible tendons and a plurality of pulleys in the same number as the joints of said multi-joint mechanism (10) that are associated with a corresponding plurality of mirror pulleys that are respectively arranged on each mirror movable portions of said mirror mechanism (30), in particular each inextensible tendon of said plurality being arranged to define a loop with said pulleys.

8. The actuating device according to claim 7, wherein said mirror mechanism (30) is located remotely with respect to said multi-joint mechanism (10) and operated by said tendons.

**9.** The actuating device according to claim 8, wherein said mirror mechanism is arranged in a backpack that can be worn by the user (150), or in a distribution case that can be put adjacent to the user (150).

**10.** The actuating device according to claim 3, wherein said passive resilient element for applying a force to said mirror segment comprises a passive torque generator comprising:

- a first rigid body and a second rigid body mechanically connected by a joint that has an axis fixed to both of them;
- a first, a second and a third idle pulley, whose axes are parallel to one another and arranged at the vertices of a triangle, being the axes of the first and of the third pulley integral to said first rigid body, the axis of the second pulley integral to said second rigid body and the axis of the third pulley collinear with the joint axis of said second rigid body with respect to said first rigid body;
- a passive linear resilient element having a first end connected to said first rigid body;
- an inextensible tendon or tendon, which is wound about the three pulleys and which has the first end connected to said first rigid body and the second end connected to the second end of the resilient element.

**11.** The actuating device according to claim 10, wherein said force intensity change means is formed by said passive torque generator, wherein said first pulley is a movable pulley arranged to adjust its own spatial position with respect to said second pulley, in particular said movable pulley being arranged to translate along a direction defined by a translation axis passing through said movable pulley and said fixed pulley.

**12.** The actuating device according to claim 1, wherein said multi-joint mechanism (10) comprises:

- a first movable portion that is movably joined to the base portion (S) through the base joint (O)
- a second movable portion which works as interaction portion (18) with a user's limb (150), in order to provide said contact point,
- a second joint, which pivotally connects the interaction portion (18) with the first movable portion, wherein the axis of the base joint (O) and the axis of the second joint are mutually orthogonal and incident with each other in a point that is distinct from said contact point;
- wherein said second movable portion, which works as interaction portion (18), has said contact point that does not fall on the axis of the second joint and has a predetermined length between said second joint and said contact point,

and said mirror mechanism (30) comprises:

- a mirror base portion (S) coincident or integral to the base portion (S) of the multi-joint mechanism (10),
- a first mirror movable portion pivotally connected to the mirror base portion (S) by a first mirror joint,
- a second mirror movable portion pivotally connected to the mirror base portion (S) by a second mirror joint,

wherein the axes of said first and said second mirror joint are mutually orthogonal and incident with each other at said mirror joint;
wherein said transmission means (25) comprises:

- a first driven pulley and an idle pulley, both having their own axes coincident with the axis of said base joint (O), wherein said first driven pulley is integral to said first movable portion of said multi-joint mechanism (10);
- a second driven pulley co-axial to said second joint of the multi-joint mechanism (10) and integral to the interaction portion (18) of the multi-joint mechanism (10);
- possible secondary idle pulleys mounted to the first movable portion of the multi-joint mechanism (10);
- a first mirror driven pulley and a mirror idle pulley, coaxial to said first joint of said mirror mechanism (30) and being said first mirror driven pulley integral to said first mirror movable portion;
- a second mirror driven pulley, which has an axis aligned to the axis of said second joint of the mirror mechanism (30) and being said second mirror driven pulley integral to said second mirror movable portion;
- possible secondary mirror idle pulleys, mounted to the first mirror movable portion;
- inextensible tendons that are wound about said driven and idle pulleys of the multi-joint mechanism (10) and of the mirror mechanism (30), in such a way that two independent mechanical transmissions are provided, wherein a first mechanical transmission transmits the torque generated on said first mirror driven pulley to said first driven pulley of the multi-joint mechanism (10), and a second mechanical transmission transmits the torque generated on said second mirror driven pulley to said second driven pulley of the multi-joint mechanism (10),
- wherein the secondary idle pulleys and the secondary mirror idle pulleys deflect the inextensible tendons in such a way that the latter are always in contact with the idle and driven pulleys during all possible movements of said multi-joint mechanism (10).

13. The actuating device according to claim 1, wherein a passive torque generator comprises:

- a couple of driven pulleys connected to a first and a second end of a stiff connection element, said stiff connection element being pivotally connected to a support at said first end;
- a movable pulley arranged to adjust its own spatial position with respect to said couple of driven pulleys;
- a connection tendon which it is arranged to connect to each other said couple of driven pulleys with said movable pulley, wherein said connection tendon is associated with a resilient element and forms a substantially closed path with said pulleys;
- wherein said first movable pulley lays in a plane slanted with respect to the plane that contains said second pulley and third pulley in such a way that said movable pulley can translate along said slanted plane without intersecting said plane on which said second pulley and said third pulley lay.

14. The actuating device according to claim 1, wherein said multi-joint mechanism (10) comprises:

- a first movable portion that is movably joined to the base portion (S) through the base joint (O);
- a second movable portion that is movably joined to the first movable portion through a second joint;
- a third movable portion that is movably joined to the second movable portion through a third joint;
- a fourth movable portion that is movably joined to the third movable portion through a fourth joint, wherein said fourth movable portion works as interaction portion (18) with a user's limb (150), in order to provide said contact point,

wherein:

- said base joint (O) and said second and third joints have axes that in pairs are mutually orthogonal and incident with each other in a same point of incidence,
- said fourth joint has axis parallel to the axis of the third joint so that the minimum distance between the axis of said third and said fourth joint determines a first kinematic segment of non-zero length
- said fourth movable portion works as interaction portion (18) and said contact point integral to the interaction portion (18) does not fall on the axis of the fourth joint, such that the kinematic segment relative to the fourth movable portion is also not zero, in such a way that said multi-joint mechanism (10) has only two kinematic segments that have a non-zero length;

wherein said mirror mechanism (30) comprises:

- a mirror base portion (S) coincident or integral to the base portion (S) of the multi-joint mechanism (10),
- a first mirror movable portion pivotally connected to the mirror base portion (S) by a first mirror joint;
- a second movable portion pivotally connected to the second mirror base portion (S) by a second mirror joint;
- a third movable portion pivotally connected to the second mirror movable portion through a third mirror movable portions;
- a fourth mirror movable portion pivotally connected to the second mirror movable portion through a fourth mirror movable portions;
- wherein the axes of said first, second and third joints are in pairs mutually orthogonal and incident with each other in a same point of incidence, whereas the axis of said fourth joint is parallel to the axis of said third joint and passes through said point of incidence

said transmission means (25) of the couple comprising:

- driven pulleys integral to the respective movable portions of said multi-joint mechanism (10);
- driven mirror pulleys integral to said mirror movable portions
- four inextensible tendons that are wound about said driven pulleys and on idle pulleys of the multi-joint mechanism (10) and of the mirror mechanism (30), in order to provide corresponding mechanical independent transmissions, for transmitting torque that is generated on said driven mirror pulleys to the respective driven pulleys of the multi-joint mechanism (10), where the idle pulleys of the multi-joint mechanism (10) and of the mirror mechanism (30) deflect the inextensible tendons in such a way that the latter are always in contact with the idle and driven pulleys during all possible movements of said multi-joint mechanism (10),

and wherein said generation means the balance forces comprises:

- two torque generators independent, the first connected to the third movable portion at a point different from said point of incidence and the second connected to the fourth movable portion at a point different from said point of incidence.

15. The actuating device according to claim 14, wherein said force intensity change means and force direction change means comprise a system of four motors, of which two first motors are operated in a way synchronous for changing the intensity of the force and two motors are operated independently for changing its direction, in particular each two first motors being associated with a single torque generator that is used for changing the distance of the first pulley with respect to the third pulley of its own torque generator, whereas each two seconds motors are used for changing the intersection of the axis of the first pulley with the axis of the third pulley of both torque generators, more in particular at least one of two axes of direction being made with a remote centre of rotation mechanism consisting of a circular guide to make a space for housing the torque generation mechanisms arranged substantially as a fixed joint with respect to each other in a central zone of said circular guide, in particular each two torque generators comprises a spiral spring.

**Patentansprüche**

1. Betätigungsvorrichtung für einen Mehrgelenkmechanismus,
   wobei der Mehrgelenkmechanismus (10) folgendes umfasst:

   - einen Basisabschnitt (S);
   - ein Basisgelenk (O) mit einer Rotationsachse (11, 21), die mit dem Basisabschnitt (S) integral ist und ein erstes Referenzsystem (x, y, z) definiert, das integral mit dem Basisabschnitt (S) ist;
   - einen Interaktionsabschnitt (18), der so angeordnet ist, dass er für ein Körperglied eines Benutzers einen Kontaktpunkt bereitstellt, an dem eine Interaktionskraft, die eine vorbestimmte Intensität und Richtung in Bezug auf das erste Referenzsystem aufweist, auf das Körperglied (F) ausgeübt wird;
   - eine vorbestimmte Anzahl beweglicher Abschnitte (1, 2, 3, 14, 15, 16, 17), die durch Gelenke (21, 22, 23, 34, 101, 102, 103) miteinander verbunden sind, um eine serielle kinematische Kette beginnend an dem Basisgelenk (O) zu bilden;

   wobei der erste bewegliche Abschnitt (1, 21) mit dem Basisabschnitt (S) durch das Basisgelenk (O) verbunden ist, und wobei der letzte bewegliche Abschnitt (3, 24) integral mit dem Interaktionsabschnitt (18) ist;
   wobei jeder der beweglichen Abschnitte (1, 2, 3, 14, 15, 16, 17) ein kinematisches Segment umfasst, dessen Länge nach Bewegung des Interaktionsabschnitts (18) im Verhältnis zu dem Basisabschnitt (S) unveränderlich ist;
wobei jedes kinematische Segment das kürzeste Segment ist, das eine erste Achse mit einer zweiten Gelenkachse benachbarter Gelenke eines beweglichen Abschnitts verbindet, oder im Falle des letzten beweglichen Abschnitts ist das kinematische Segment ein Segment, das sich zwischen dem letzten Gelenk und dem Kontaktpunkt des Interaktionsabschnitts (18) befindet;
wobei die Betätigungsvorrichtung folgendes umfasst:

   - einen Spiegelmechanismus (30), umfassend:

      - wenigstens ein Spiegelgelenk (O'), das integral ist mit dem Basisabschnitt (S) und ein zweites Referenzsystem (x', y', z') definiert, das integral mit dem Basisabschnitt (S) ist;
      - eine Anzahl gespiegelter beweglicher Abschnitte und entsprechend eine Anzahl gespiegelter kinematischer Segmente (14', 15', 16', 17'), wobei die Anzahl der Anzahl der beweglichen Abschnitte entspricht sowie der gleichen Anzahl wie der kinematischen Segmente des Mehrgelenkmechanismus (10), wobei jedes gespiegelte kinematische Segment an einem Ende drehbar mit dem Basisabschnitt (S) und dem Spiegelgelenk verbunden ist und eine Länge aufweist, die proportional ist zu der Länge des entsprechenden kinematischen Segments des Mehrgelenkmechanismus (10) gemäß einem übereinstimmenden Proportionalitätsfaktor für alle kinematischen Segmente;

   - eine Ausgleichskraft-Erzeugungseinrichtung (k'1, k'2, k'3, 40, 80, 89) zum Erzeugen eines Systems von Ausgleichskräften, die auf die gespiegelten kinematischen Segmente (14', 15', 16', 17') einwirken;
   - eine Übertragungseinrichtung (25), die sich zwischen dem Mehrgelenkmechanismus (10) und dem Spiegelmechanismus (30) befindet,

wobei die Übertragungseinrichtung (25) so gestaltet ist, dass sie:

   - die Richtung jedes kinematischen Segments (1, 2, 3, 14, 15, 16, 17) des Mehrgelenkmechanismus (10) im Verhältnis zu dem ersten Referenzsystem im Wesentlichen übereinstimmend hält mit der Richtung jedes der gespiegelten kinematischen Segmente (1', 2', 3', 14', 15', 16', 17') im Verhältnis zu dem zweiten Referenzsystem in Bezug auf mögliche Bewegungen des Interaktionsabschnitts (18) im Verhältnis zu dem Basisabschnitt (S);

- das System der Ausgleichskräfte von dem Spiegelmechanismus (30) auf den Mehrgelenkmechanismus (10) so überträgt, dass die auf den Kontaktpunkt des Interaktionsabschnitts (18) ausgeübte Interaktionskraft (F) durch die Ausgleichskräfte ausgeglichen wird.

2. Betätigungsvorrichtung nach Anspruch 1, wobei die Ausgleichskraft-Erzeugungseinrichtung, welche ein System von Ausgleichskräften erzeugt, eine Einrichtung umfasst, die ausgewählt ist aus der Gruppe bestehend aus:

- einer Kraftintensitätsanpassungseinrichtung, die auf Veränderungen der Intensität einer Belastung anspricht, die auf den Interaktionsabschnitt (18) einwirkt;
- eine Kraftrichtungsanpassungseinrichtung zur Veränderung der Richtung der Kraft als Reaktion auf Veränderungen der Richtung einer Belastung, die auf den Interaktionsabschnitt (18) einwirkt;
- einer Kombination davon.

3. Betätigungsvorrichtung nach Anspruch 2, wobei die Ausgleichskraft-Erzeugungseinrichtung ein passives elastisches Element umfasst, das einem vorbestimmten gespiegelten kinematischen Segment zugeordnet ist, wobei das passive elastische Element ein erstes und ein zweites Ende aufweist, wobei das erste Ende mit dem mobilen Ende des gespiegelten kinematischen Segments verbunden ist, und wobei das zweite Ende mit einem Stützelement verbunden ist, das integral ist mit dem Basisabschnitt (S) des Mehrgelenkmechanismus (10).

4. Betätigungsvorrichtung nach Anspruch 2, wobei die Kraftintensitätsanpassungseinrichtung eine erste Einrichtung umfasst, um das Stützelement im Verhältnis zu dem Basisabschnitt (S) zu bewegen, und wobei die Kraftrichtungsanpassungseinrichtung eine zweite Einrichtung umfasst, um das Stützelement im Verhältnis zu dem Basisabschnitt (S) zu bewegen, wobei die erste Einrichtung zum Bewegen des Stützelements im Verhältnis zu dem Basisabschnitt (S) insbesondere so angeordnet ist, dass sie den Abstand zwischen dem ersten und dem zweiten Ende anpasst.

5. Betätigungsvorrichtung nach Anspruch 4, wobei die zweite Einrichtung zum Bewegen des Stützelements im Verhältnis zu dem Basisabschnitt (S) so angeordnet ist, dass sie die Richtung einer Linie anpasst, die zwischen dem ersten und dem zweiten Ende verläuft.

6. Betätigungsvorrichtung nach Anspruch 1, wobei die Ausgleichskraft-Erzeugungseinrichtung Drehmomenterzeugungsmechanismen in der gleichen Anzahl wie die kinematischen Segmente umfasst, die eine Länge von ungleich Null aufweisen, wobei jeder der Drehmomenterzeugungsmechanismen:

- mit dem Spiegelmechanismus (30) und der Kraftintensitätsanpassungseinrichtung und/oder der Kraftrichtungsanpassungseinrichtung mechanisch verbunden ist;
- nur mit passiven elastischen Elementen ausgerüstet ist;
- einem spezifischen kinematischen Segment des Spiegelmechanismus zugeordnet ist.

7. Betätigungsvorrichtung nach Anspruch 4, wobei die Übertragungseinrichtung (25) eine Mehrzahl nicht dehnbarer Sehnen umfasst und eine Mehrzahl von Riemenscheiben in der gleichen Anzahl wie die Gelenke des Mehrgelenkmechanismus (10), die einer entsprechenden Mehrzahl von Spiegelriemenscheiben zugeordnet sind, die entsprechend an jedem gespiegelten beweglichen Abschnitt des Spiegelmechanismus (30) angeordnet sind, wobei insbesondre jede nicht dehnbare Sehne der Mehrzahl so angeordnet ist, dass sie mit den Riemenscheiben eine Schleife definieren.

8. Betätigungsvorrichtung nach Anspruch 7, wobei der Spiegelmechanismus (30) entfernt angeordnet ist im Verhältnis zu dem Mehrgelenkmechanismus (10) und durch die Sehnen betrieben wird.

9. Betätigungsvorrichtung nach Anspruch 8, wobei der Spiegelmechanismus in einem Rucksack angeordnet ist, der von dem Benutzer (150) getragen werden kann, oder in einem Verteilerkasten, der neben dem Benutzer (150) platziert werden kann.

10. Betätigungsvorrichtung nach Anspruch 3, wobei das passive elastische Element zum Ausüben einer Kraft auf das Spiegelsegment einen passiven Drehmomentgenerator umfasst, umfassend:

- einen ersten starren Körper und einen zweiten starren Körper, die durch ein Gelenk, das eine an beiden Körpern befestigte Achse aufweist, mechanisch verbunden sind;
- eine erste, eine zweite und eine dritte Laufrolle, deren Achsen parallel zueinander und an den Eckpunkten eines Dreiecks angeordnet sind, wobei dies die Achsen der ersten und der dritten Riemenscheibe sind, integral mit dem ersten starren Körper, die Achse der zweiten Riemenscheibe, integral mit dem zweiten starren Körper, und die Achse der dritten Riemenscheibe, kollinear mit der Gelenkachse des zweiten starren Körpers im Verhältnis zu dem ersten starren Körper;

- ein passives, linear elastisches Element mit einem ersten Ende, das mit dem ersten starren Körper verbunden ist;

- eine nicht dehnbare Sehne oder eine Sehne, die um die drei Riemenscheiben gewickelt ist, und deren erstes Ende mit dem ersten starren Körper verbunden ist, und wobei deren zweites Ende mit dem zweiten Ende des elastischen Elements verbunden ist.

11. Betätigungsvorrichtung nach Anspruch 3, wobei die genannte Kraftintensitätsanpassungseinrichtung durch den passiven Drehmomentgenerator gebildet wird, wobei die erste Riemenscheibe eine bewegliche Riemenscheibe ist, die so angeordnet ist, dass sie ihre eigene räumliche Position im Verhältnis zu der zweiten Riemenscheibe anpasst, wobei die bewegliche Riemenscheibe insbesondere so angeordnet ist, dass sie sich entlang einer Richtung verschiebt, die durch eine Verschiebungsachse definiert ist, die durch die bewegliche Riemenscheibe und die feste Riemenscheibe verläuft.

12. Betätigungsvorrichtung nach Anspruch 1, wobei der Mehrgelenkmechanismus (10) folgendes umfasst:

- einen ersten beweglichen Abschnitt, der beweglich über das Basisgelenk (O) mit dem Basisabschnitt (S) verbunden ist;

- einen zweiten beweglichen Abschnitt, der als ein Interaktionsabschnitt (18) mit einem Körperglied (150) eines Benutzers funktioniert, um den Kontaktpunkt bereitzustellen;

- ein zweites Gelenk, welches den Interaktionsabschnitt (18) mit dem ersten beweglichen Abschnitt drehbar verbindet, wobei die Achse des Basisgelenks (O) und die Achse des zweiten Gelenks zueinander orthogonal sind und in einem Punkt zusammenfallen, der sich von dem Kontaktpunkt unterscheidet;

- wobei der zweite bewegliche Abschnitt, der als Interaktionsabschnitt (18) funktioniert, den Kontaktpunkt aufweist, der nicht auf die Achse des zweiten Gelenks fällt und eine vorbestimmte Länge zwischen dem zweiten Gelenk und dem Kontaktpunkt aufweist;

und wobei der Spiegelmechanismus (30) folgendes umfasst:

- einen gespiegelten Basisabschnitt (S), der mit dem Basisabschnitt (S) des Mehrgelenkmechanismus (10) zusammenfällt oder integral ist;

- einen ersten gespiegelten beweglichen Abschnitt, der durch ein erstes Spiegelgelenk drehbar mit dem gespiegelten Basisabschnitt (S) verbunden ist;

- einen zweiten gespiegelten beweglichen Abschnitt, der durch ein zweites Spiegelgelenk drehbar mit dem gespiegelten Basisabschnitt (S) verbunden ist;

wobei die Übertragungseinrichtung (25) folgendes umfasst:

- eine erste Antriebsscheibe und eine Laufrolle, deren eigenen Achsen mit der Achse des Basisgelenks (O) zusammenfallen, wobei die erste Antriebsscheibe integral mit dem ersten beweglichen Abschnitt des Mehrgelenkmechanismus (10) ist;

- eine zweite Antriebsscheibe, die koaxial zu dem zweiten Gelenk des Mehrgelenkmechanismus (10) und integral mit dem Interaktionsabschnitt (18) des Mehrgelenkmechanismus (10) ist;

- mögliche sekundäre Laufrollen, die an dem ersten beweglichen Abschnitt des Mehrgelenkmechanismus (10) angebracht sind;

- eine erste gespiegelte Antriebsscheibe und eine gespiegelte Laufrolle, die koaxial zu dem ersten Gelenk des Spiegelmechanismus (30) ist und die erste gespiegelte Antriebsscheibe ist, die integral mit dem ersten gespiegelten beweglichen Abschnitt ist;

- eine zweite gespiegelte Antriebsscheibe, die eine Achse aufweist, die mit der Achse des zweiten Gelenks des Spiegelmechanismus (30) ausgerichtet ist und die zweite gespiegelte Antriebsscheibe ist, die integral mit dem zweiten gespiegelten beweglichen Abschnitt ist;

- mögliche sekundäre gespiegelte Laufrollen, die an dem ersten gespiegelten beweglichen Abschnitt angebracht sind;

- nicht dehnbare Sehnen, die so um die Antriebsscheiben und Laufrollen des Mehrgelenkmechanismus (10) und des Spiegelmechanismus (30) gewickelt sind, dass zwei unabhängige mechanische Kraftübertragungen bereitgestellt werden, wobei eine erste mechanische Kraftübertragung das an der ersten gespiegelten Antriebsscheibe erzeugte Drehmoment zu der ersten Antriebsscheibe des Mehrgelenkmechanismus (10) überträgt, und wobei eine zweite mechanische Kraftübertragung das an der zweiten gespiegelten Antriebsscheibe erzeugte Drehmoment zu der zweiten Antriebsscheibe des Mehrgelenkmechanismus (10) überträgt;

- wobei die sekundären Laufrollen und die sekundären gespiegelten Laufrollen die nicht dehnbaren Sehnen so ablenken, dass letztere sich immerwährend allen möglichen Bewegungen des Mehrgelenkmechanismus (10) in Kontakt mit den Laufrollen und Antriebsscheiben befinden.

13. Betätigungsvorrichtung nach Anspruch 1, wobei ein passiver Drehmomentgenerator folgendes umfasst:

- ein Paar von Antriebsscheiben, die mit einem ersten und einem zweiten Ende eines steifen Verbindungselements verbunden sind, wobei das steife Verbindungselement an dem ersten Ende drehbar mit einer Stütze verbunden ist;
- eine bewegliche Riemenscheibe, die so angeordnet ist, dass sie ihre eigene räumliche Position im Verhältnis zu dem Paar von Antriebsscheiben anpasst;
- eine Verbindungssehne, die so angeordnet ist, dass sie das Paar von Antriebsscheiben mit der beweglichen Riemenscheibe verbindet, wobei die Verbindungssehne einem elastischen Element zugeordnet ist und einen im Wesentlichen geschlossenen Pfad mit den Riemenscheiben bildet;
- wobei die erste bewegliche Riemenscheibe in einer Ebene liegt, die schräg ist im Verhältnis zu der Ebene, welche die zweite Riemenscheibe und die dritte Riemenscheibe aufweist, so dass sich die bewegliche Riemenscheibe entlang der schrägen Ebene verschieben kann, ohne die Ebene zu schneiden, auf welcher die zweite Riemenscheibe und die dritte Riemenscheibe liegen.

14. Betätigungsvorrichtung nach Anspruch 1, wobei der Mehrgelenkmechanismus (10) folgendes umfasst:

- einen ersten beweglichen Abschnitt, der über das Basisgelenk (O) beweglich mit dem Basisabschnitt (S) verbunden ist;
- einen zweiten beweglichen Abschnitt, der über das zweite Gelenk beweglich mit dem ersten beweglichen Abschnitt verbunden ist;
- einen dritten beweglichen Abschnitt, der über ein drittes Gelenk beweglich mit dem zweiten beweglichen Abschnitt verbunden ist;
- einen vierten beweglichen Abschnitt, der über ein viertes Gelenk mit dem dritten beweglichen Abschnitt beweglich verbunden ist, wobei der vierte bewegliche Abschnitt als Interaktionsabschnitt (18) mit einem Körperglied (150) eines Benutzers funktioniert, um den Kontaktpunkt bereitzustellen;

wobei:

- das Basisgelenk (O) und die zweiten und dritten Gelenke Achsen aufweisen, die paarweise orthogonal zueinander sind und in einem gleichen Auftreffpunkt zusammenfallen;
- das vierte Gelenk eine Achse aufweist, die parallel ist zu der Achse des dritten Gelenks, so dass der Mindestabstand zwischen der Achse des dritten und des vierten Gelenks ein erstes kinematisches Segment mit einer Länge von ungleich Null bestimmt;
- der vierte bewegliche Abschnitt als Interaktionsabschnitt (18) funktioniert, und wobei der Kontaktpunkt, der integral mit dem Interaktionsabschnitt (18) ist, nicht auf die Achse des vierten Punkts fällt, so dass das kinematische Segment im Verhältnis zu dem vierten beweglichen Abschnitt ebenfalls ungleich Null ist, so dass der Mehrgelenkmechanismus (10) nur zwei kinematische Segmente aufweist, die eine Länge von ungleich Null aufweisen;

wobei der Spiegelmechanismus (30) folgendes umfasst:

- einen gespiegelten Basisabschnitt (S), der mit dem Basisabschnitt (S) des Mehrgelenkmechanismus (10) zusammenfällt oder integral ist;
- einen ersten gespiegelten beweglichen Abschnitt, der über ein erstes Spiegelgelenk mit dem gespiegelten Basisabschnitt (S) verbunden ist;
- einen zweiten beweglichen Abschnitt, der über ein zweites Spiegelgelenk drehbar mit dem zweiten gespiegelten Basisabschnitt (S) verbunden ist;
- einen dritten beweglichen Abschnitt, der über einen dritten gespiegelten beweglichen Abschnitt mit dem zweiten gespiegelten beweglichen Abschnitt verbunden ist;
- einen vierten gespiegelten beweglichen Abschnitt, der über einen vierten gespiegelten beweglichen Abschnitt drehbar mit dem zweiten gespiegelten beweglichen Abschnitt verbunden ist;
- wobei die Achsen des ersten, zweiten und dritten Gelenks paarweise orthogonal zueinander sind und in einem gleichen Auftreffpunkt zusammenfallen, während die Achse des vierten Gelenks parallel ist zu der Achse des dritten Gelenks und durch den Auftreffpunkt verläuft;

wobei die Übertragungseinrichtung (25) des Paares folgendes umfasst:

- Antriebsscheiben, die integral mit den entsprechenden beweglichen Abschnitten des Mehrgelenkmechanismus (10) sind;
- Antriebsscheiben, die integral mit den gespiegelten beweglichen Abschnitten sind;
- vier nicht dehnbare Sehnen, die um die Antriebsscheiben und auf Laufrollen des Mehrgelenkmechanismus (10) und des Spiegelmechanismus (30) gewickelt sind, um entsprechend mechanisch unabhängige Kraftübertragungen bereitzustellen, zur Übertragung von an den gespiegelten Antriebsscheiben erzeugtem Drehmoment auf die entsprechenden Antriebsscheiben des Mehrgelenkmechanismus (10), wobei die Laufrollen des Mehrgelenkmechanismus (10) und des Spiegelmechanismus (30) die nicht dehnbaren Sehnen so ablenken, dass letztere sich während allen möglichen Bewegungen des Mehrgelenkmechanismus (10) immer in Kontakt mit den Laufrollen und Antriebsscheiben befinden;

und wobei die Erzeugungseinrichtung für die Ausgleichskräfte folgendes umfasst:

- zwei unabhängige Drehmomentgeneratoren, wobei der erste an einem anderen Punkt als dem Auftreffpunkt mit dem dritten beweglichen Abschnitt verbunden ist, und wobei der zweite Generator an einem anderen Punkt als dem Auftreffpunkt mit dem vierten beweglichen Abschnitt verbunden ist.

**15.** Betätigungsvorrichtung nach Anspruch 14, wobei die Kraftintensitätsanpassungseinrichtung und die Kraftrichtungsanpassungseinrichtung ein System von vier Motoren umfassen, wovon zwei erste Motoren synchron betrieben werden, um die Intensität der Kraft anzupassen, und wobei zwei Motoren unabhängig betrieben werden, um ihre Richtung zu verändern, wobei insbesondere jeder der beiden ersten Motoren einem einzigen Drehmomentgenerator zugeordnet ist, der verwendet wird, um den Abstand der ersten Riemenscheibe im Verhältnis zu der dritten Riemenscheibe des eigenen Drehmomentgenerators anzupassen, während jeder der beiden zweiten Motoren verwendet wird, um die Schnittstelle der Achse der ersten Riemenscheibe mi der Achse der dritten Riemenscheibe beider Drehmomentgeneratoren anzupassen, wobei insbesondere wenigstens eine der beiden Richtungsachsen mit einem entfernten Drehmittelpunktmechanismus erzeugt wird, bestehend aus einer runden Führung, um einen Raum zur Unterbringung der Drehmomenterzeugungsmechanismen zu erzeugen, im Wesentlichen angeordnet als festes Gelenk im Verhältnis zueinander in einer zentralen Zone der runden Führung, wobei jeder der beiden Drehmomentgeneratoren insbesondere eine Spiralfeder umfasst.

## Revendications

**1.** Dispositif d'actionnement pour un mécanisme à articulations multiples, ledit mécanisme à articulations multiples (10) comprenant :

une partie de base (S) ;
une articulation de base (O) qui a un axe de rotation (11, 21) qui fait partie intégrante de ladite partie de base (S) et définit un premier système de référence (x, y, z) faisant partie intégrante de ladite partie de base (S) ;
une partie d'interaction (18) conçue pour fournir à un membre d'un utilisateur un point de contact, au niveau duquel il est appliqué audit membre (F) une force d'interaction qui a une intensité et une direction prédéfinies par rapport audit premier système de référence ;
un nombre prédéfini de parties mobiles (1, 2, 3, 14, 15, 16, 17) reliées entre elles par des articulations (21, 22, 23, 24, 101, 102, 103), afin de former une chaîne cinématique en série débutant à partir de ladite articulation de base (O),

la première partie mobile (1,21) étant reliée à ladite partie de base (S) par ladite articulation de base (O) et la dernière partie mobile (3, 24) faisant partie intégrante de ladite partie d'interaction (18),
chacune desdites parties mobiles (1, 2, 3, 14, 15, 16, 17) comprenant un segment cinématique dont la longueur est indifférente au déplacement de ladite partie d'interaction (18) par rapport à ladite partie de base (S),
chaque segment cinématique étant le segment le plus court reliant un premier axe à un second axe d'articulation d'articulations adjacentes d'une partie mobile ou, dans le cas de la dernière partie mobile, ledit segment cinématique étant un segment situé entre la dernière articulation et ledit point de contact de ladite partie d'interaction (18) ;

ledit appareil d'actionnement comprenant :

un mécanisme en miroir (30) comprenant :

au moins une articulation en miroir (O') faisant partie intégrante de ladite partie de base (S), définissant un second système de référence (x', y', z') faisant partie intégrante de ladite partie de base (S),
un certain nombre de parties mobiles en miroir et, respectivement, de segments cinématiques en miroir (14', 15', 16', 17'), qui est le même nombre que les parties mobiles et le même nombre que les segments cinématiques dudit mécanisme à articulations multiples (10), chaque segment cinématique en miroir étant relié de façon pivotante à ladite partie de base (S) à une extrémité de celle-ci et à ladite articulation en miroir et ayant une longueur proportionnelle à la longueur du segment cinématique correspondant du mécanisme à articulations multiples (10), selon un même facteur de proportionnalité pour tous les segments cinématiques ;

des moyens de génération de force d'équilibre (k'1, k'2, k'3, 40, 80, 89) pour générer un système de forces d'équilibre agissant sur lesdits segments cinématiques en miroir (14', 15', 16', 17'),

des moyens de transmission (25) qui sont situés entre ledit mécanisme à articulations multiples (10) et ledit mécanisme en miroir (30),

lesdits moyens de transmission (25) étant conçus pour :

maintenir la direction de chaque segment cinématique (1, 2, 3, 14, 15, 16, 17) dudit mécanisme à articulations multiples (10) par rapport audit premier système de référence sensiblement la même que la direction de chacun desdits segments cinématiques en miroir (1', 2', 3', 14', 15', 16', 17') par rapport audit second système de référence, pour tout déplacement possible de ladite partie d'interaction (18) par rapport à ladite partie de base (S),

transmettre ledit système de forces d'équilibre dudit mécanisme en miroir (30) audit mécanisme à articulations multiples (10), de sorte que ladite force d'interaction (F) appliquée audit point de contact de ladite partie d'interaction (18) soit équilibrée par lesdites forces d'équilibre.

2. Dispositif d'actionnement selon la revendication 1, lesdits moyens de génération de force d'équilibre qui génèrent un système de forces d'équilibre comprenant des moyens choisis dans le groupe constitué par :

des moyens de changement d'intensité de force sensibles aux variations de l'intensité d'une charge agissant sur ladite partie d'interaction (18) ;

des moyens de changement de direction de force pour changer la direction de ladite force en réaction aux variations de la direction d'une charge agissant sur ladite partie d'interaction (18) ;

une combinaison de ceux-ci.

3. Dispositif d'actionnement selon la revendication 2, lesdits moyens de génération de force d'équilibre comprenant un élément élastique passif associé à un segment cinématique en miroir prédéfini, ledit élément élastique passif ayant une première et une seconde extrémité, ladite première extrémité étant reliée à l'extrémité mobile dudit segment cinématique en miroir et ladite seconde extrémité étant reliée à un élément de support faisant partie intégrante de ladite partie de base (S) du mécanisme à articulations multiples (10).

4. Dispositif d'actionnement selon la revendication 2, lesdits moyens de changement d'intensité de force comprenant des premiers moyens pour déplacer ledit élément de support par rapport à ladite partie de base (S) et lesdits moyens de changement de direction de force comprenant des seconds moyens pour déplacer ledit élément de support par rapport à ladite partie de base (S), en particulier lesdits premiers moyens pour déplacer ledit élément de support par rapport à ladite partie de base (S) étant conçus pour modifier la distance entre lesdites première et seconde extrémités.

5. Dispositif d'actionnement selon la revendication 4, lesdits seconds moyens pour déplacer ledit élément de support par rapport à ladite partie de base (S) étant conçus pour modifier la direction d'une ligne qui passe entre lesdites première et seconde extrémités.

6. Dispositif d'actionnement selon la revendication 1, lesdits moyens de génération de force d'équilibre comprenant des mécanismes de génération de couple dans le même nombre que lesdits segments cinématiques qui ont une longueur non nulle, chacun desdits mécanismes de génération de couple :

étant relié mécaniquement audit mécanisme en miroir (30) et auxdits moyens de changement d'intensité de force et/ou auxdits moyens de changement de direction de force ;

étant uniquement équipé d'éléments élastiques passifs,

étant associé à un segment cinématique spécifique dudit mécanisme en miroir.

7. Dispositif d'actionnement selon la revendication 1, lesdits moyens de transmission (25) comprenant une pluralité de tendons inextensibles et une pluralité de poulies dans le même nombre que les articulations dudit mécanisme à articulations multiples (10) qui sont associés à une pluralité de poulies en miroir correspondantes qui sont respectivement disposées sur chaque partie mobile en miroir dudit mécanisme en miroir (30), en particulier chaque tendon inextensible de ladite pluralité étant disposé pour définir une boucle avec lesdites poulies.

**8.** Dispositif d'actionnement selon la revendication 7, ledit mécanisme en miroir (30) étant situé à distance par rapport audit mécanisme à articulations multiples (10) et actionné par lesdits tendons.

**9.** Dispositif d'actionnement selon la revendication 8, ledit mécanisme en miroir étant disposé dans un sac à dos qui peut être porté par l'utilisateur (150), ou dans un boîtier de distribution qui peut être placé à proximité de l'utilisateur (150).

**10.** Dispositif d'actionnement selon la revendication 3, ledit élément élastique passif pour appliquer une force audit segment en miroir comprenant un générateur de couple passif comprenant :

un premier corps rigide et un second corps rigide mécaniquement reliés par une articulation qui a un axe fixe pour chacun d'eux ;
une première, une deuxième et une troisième poulie folle, dont les axes sont parallèles les uns aux autres et disposés aux sommets d'un triangle, les axes de la première et de la troisième poulie faisant partie intégrante dudit premier corps rigide, l'axe de la deuxième poulie faisant partie intégrante dudit second corps rigide et l'axe de la troisième poulie étant colinéaire avec l'axe d'articulation dudit second corps rigide par rapport audit premier corps rigide ;
un élément élastique linéaire passif ayant une première extrémité reliée audit premier corps rigide ;
un tendon inextensible ou tendon, qui est enroulé autour des trois poulies et qui a la première extrémité reliée audit premier corps rigide et la seconde extrémité reliée à la seconde extrémité de l'élément élastique.

**11.** Dispositif d'actionnement selon la revendication 10, lesdits moyens de changement d'intensité de force étant formés par ledit générateur de couple passif, ladite première poulie étant une poulie mobile conçue pour ajuster sa propre position spatiale par rapport à ladite seconde poulie, notamment ladite poulie mobile étant conçue pour effectuer un mouvement de translation le long d'une direction définie par un axe de translation passant par ladite poulie mobile et ladite poulie fixe.

**12.** Dispositif d'actionnement selon la revendication 1, ledit mécanisme à articulations multiples (10) comprenant :

une première partie mobile qui est articulée de façon mobile sur la partie de base (S) par le biais de l'articulation de base (O)

une deuxième partie mobile qui fonctionne comme partie d'interaction (18) avec un membre d'un utilisateur (150), de sorte à fournir ledit point de contact,
une deuxième articulation, qui relie de façon pivotante la partie d'interaction (18) à la première partie mobile, l'axe de l'articulation de base (O) et l'axe de la deuxième articulation étant mutuellement orthogonaux et incidents entre eux en un point qui est différent dudit point de contact ;
ladite deuxième partie mobile, qui fonctionne comme partie d'interaction (18), ayant ledit point de contact qui ne tombe pas sur l'axe de la deuxième articulation et ayant une longueur prédéfinie entre ladite deuxième articulation et ledit point de contact,

et ledit mécanisme en miroir (30) comprenant :

une partie de base en miroir (S) coïncidant avec ou faisant partie intégrante de la partie de base (S) du mécanisme à articulations multiples (10),
une première partie mobile en miroir reliée de façon pivotante à la partie de base en miroir (S) par une première articulation en miroir,
une deuxième partie mobile en miroir reliée de façon pivotante à la partie de base de miroir (S) par une seconde articulation en miroir,
les axes desdites première et seconde articulations en miroir étant mutuellement orthogonaux et incidents entre eux au niveau de ladite articulation en miroir ;

lesdits moyens de transmission (25) comprenant :

une première poulie entraînée et une poulie folle, les deux ayant leurs propres axes qui coïncident avec l'axe de ladite articulation de base (O), ladite première poulie entraînée faisant partie intégrante de ladite première partie mobile dudit mécanisme à articulations multiples (10) ;
une seconde poulie entraînée coaxiale à ladite deuxième articulation du mécanisme à articulations multiples (10) et faisant partie intégrante de la partie d'interaction (18) du mécanisme à articulations multiples (10) ;
de possibles poulies folles secondaires montées sur la première partie mobile du mécanisme à articulations multiples (10) ;

une première poulie entraînée en miroir et une poulie folle en miroir, coaxiales à ladite première articulation dudit mécanisme en miroir (30) et ladite première poulie entraînée en miroir faisant partie intégrante de ladite première partie mobile en miroir ;

une seconde poulie entraînée en miroir, qui a un axe aligné avec l'axe de ladite deuxième articulation du mécanisme en miroir (30) et ladite seconde poulie entraînée en miroir faisant partie intégrante de ladite deuxième partie mobile en miroir ;

de possibles poulies folles en miroir secondaires, montées sur la première partie mobile en miroir ;

des tendons inextensibles qui sont enroulés autour desdites poulies entraînée et folle du mécanisme à articulations multiples (10) et du mécanisme en miroir (30), de sorte que deux transmissions mécaniques indépendantes soient fournies, une première transmission mécanique transmettant le couple généré sur ladite première poulie entraînée en miroir à ladite première poulie entraînée du mécanisme à articulations multiples (10), et une seconde transmission mécanique transmettant le couple généré sur ladite seconde poulie entraînée en miroir à ladite seconde poulie entraînée du mécanisme à articulations multiples (10),

les poulies folles secondaires et les poulies folles secondaires en miroir déformant les tendons inextensibles de sorte que ces derniers soient toujours en contact avec les poulies folles et entraînées pendant tous les déplacements possibles dudit mécanisme à articulations multiples (10).

13. Dispositif d'actionnement selon la revendication 1, un générateur de couple passif comprenant :

un couple de poulies entraînées reliées à une première et à une seconde extrémité d'un élément de raccord rigide, ledit élément de raccord rigide étant relié de façon pivotante à un support au niveau de ladite première extrémité ;

une poulie mobile conçue pour ajuster sa propre position spatiale par rapport audit couple de poulies entraînées ;

un tendon de raccord qui est conçu pour relier l'une à l'autre ledit couple de poulies entraînées avec ladite poulie mobile, ledit tendon de raccord étant associé à un élément résilient et formant un chemin sensiblement fermé avec lesdites poulies ;

ladite première poulie mobile reposant sur un plan incliné par rapport au plan contenant lesdites deuxième poulie et troisième poulie de sorte que ladite poulie mobile puisse effectuer un mouvement de translation le long dudit plan incliné sans couper ledit plan sur lequel ladite deuxième poulie et ladite troisième poulie reposent.

14. Dispositif d'actionnement selon la revendication 1, ledit mécanisme à articulations multiples (10) comprenant :

une première partie mobile qui est articulée de façon mobile à la partie de base (S) par le biais de l'articulation de base (O) ;

une deuxième partie mobile qui est articulée de façon mobile à la première partie mobile par une deuxième articulation ;

une troisième partie mobile qui est articulée de façon mobile à la deuxième partie mobile par une troisième articulation ;

une quatrième partie mobile qui est articulée de façon mobile à la troisième partie mobile par une quatrième articulation, ladite quatrième partie mobile fonctionnant comme partie d'interaction (18) avec un membre de l'utilisateur (150), afin de fournir ledit point de contact,

ladite articulation de base (O) et lesdites deuxième et troisième articulations ayant des axes qui en paires sont mutuellement orthogonaux et incidents entre eux en un même point d'incidence,

ladite quatrième articulation ayant un axe parallèle à l'axe de la troisième articulation de sorte que la distance minimale entre l'axe desdites troisième et quatrième articulations détermine un premier segment cinématique de longueur non nulle,

ladite quatrième partie mobile fonctionne comme partie d'interaction (18) et ledit point de contact faisant partie intégrante de la partie d'interaction (18) ne tombant pas sur l'axe de la quatrième articulation, de sorte que le segment cinématique par rapport à la quatrième partie mobile soit également non nul, de sorte que ledit mécanisme à articulations multiples (10) ait uniquement deux segments cinématiques qui ont une longueur non nulle ;

ledit mécanisme en miroir (30) comprenant :

une partie de base en miroir (S) coïncidant avec ou faisant partie intégrante de la partie de base (S) du mécanisme à articulations multiples (10) ;

une première partie mobile en miroir reliée de façon pivotante à la partie de base en miroir (S) par une première articulation en miroir ;

une deuxième partie mobile reliée de façon pivotante à la seconde partie de base en miroir (S) par une seconde articulation en miroir ;

une troisième partie mobile reliée de façon pivotante à la deuxième partie mobile en miroir par une troisième partie mobile en miroir ;

une quatrième partie mobile en miroir reliée de façon pivotante à la seconde partie mobile en miroir par une quatrième partie mobile en miroir ;

les axes desdites première, deuxième et troisième articulations étant en paires mutuellement orthogonaux et incidents entre eux en un même point d'incidence, tandis que l'axe de ladite quatrième articulation étant parallèle à l'axe de ladite troisième articulation et traversant ledit point d'incidence ;

lesdits moyens de transmission (25) du couple comprenant :

des poulies entraînées faisant partie intégrante des parties mobiles respectives dudit mécanisme à articulations multiples (10) ;

des poulies entraînées en miroir faisant partie intégrante desdites parties mobiles en miroir ;

quatre tendons inextensibles qui sont enroulés autour desdites poulies entraînées et autour des poulies folles du mécanisme à articulations multiples (10) et du mécanisme en miroir (30), de sorte à fournir des transmissions mécaniques indépendantes correspondantes, pour transmettre le couple qui est généré sur lesdites poulies entraînées en miroir aux poulies entraînées respectives du mécanisme à articulations multiples (10), les poulies folles du mécanisme à articulations multiples (10) et du mécanisme en miroir (30) déformant les tendons inextensibles de sorte que ces derniers soient toujours en contact avec les poulies folles et entraînées pendant tous les déplacements possibles dudit mécanisme à articulations multiples (10),

et les moyens de génération de forces d'équilibre comprenant :

deux générateurs de couple indépendants, le premier étant relié à la troisième partie mobile à un point différent dudit point d'incidence et le second étant relié à la quatrième partie mobile à un point différent dudit point d'incidence.

15. Dispositif d'actionnement selon la revendication 14, lesdits moyens de changement d'intensité de force et moyens de changement de direction de force comprenant un système de quatre moteurs, dont deux premiers moteurs fonctionnent de manière synchrone pour changer l'intensité de la force et deux moteurs fonctionnent indépendamment pour changer sa direction, en particulier chacun des deux premiers moteurs étant associé à un générateur de couple unique qui est utilisé pour changer la distance de la première poulie par rapport à la troisième poulie de son propre générateur de couple, tandis que chacun des deux seconds moteurs est utilisé pour changer la coupe de l'axe de la première poulie avec l'axe de la troisième poulie des deux générateurs de couple, plus particulièrement au moins un des deux axes de direction étant fait avec un mécanisme à centre de rotation distant consistant en un guide circulaire pour créer un espace où loger les mécanismes de génération de couple conçus sensiblement comme une articulation fixe mutuellement dans une zone centrale dudit guide circulaire, en particulier chacun des deux générateurs de couple comprenant un ressort spiral.

_Fig.1A_

_Fig. 1B_

## Fig.2

## Fig.3

## Fig. 4A

**Fig. 4B**

**Fig. 4C**

## Fig.4D

EP 2 861 387 B1

10

13

Fig.5

11

12

14

L

F

18

15

30

25

Fig.6

11'

51

55

14'

12'

13'

55

52

15'

# Fig.7

## Fig.8

# Fig.9

# Fig.10

# Fig.11

## Fig.12

# Fig.13

# Fig.14

**Fig.15**

# Fig.16

Fig.17

# Fig.18

**EP 2 861 387 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102088933
- FR 2541574 A1

- WO 2012042416 A2

### Non-patent literature cited in the description

- **R BARENTS ; M SCHENK ; WD VAN DORSSER ; BM WISSE ; JL HERDER.** Spring-to-Spring Balancing as Energy-Free Adjustment Method in Gravity Equilibrators. *ASME Journal of Mechanical Design,* 2011, vol. 133 (6), 061010